(19) Europäisches Patentamt
European Patent Office
Office européen des brevets

(11) **EP 1 983 653 A1**

(12) **EUROPEAN PATENT APPLICATION**
published in accordance with Art. 158(3) EPC

(43) Date of publication:
**22.10.2008 Bulletin 2008/43**

(51) Int Cl.:
***H04B 1/707*** (2006.01)   ***H04J 11/00*** (2006.01)

(21) Application number: **07707256.9**

(22) Date of filing: **23.01.2007**

(86) International application number:
**PCT/JP2007/051005**

(87) International publication number:
**WO 2007/088752 (09.08.2007 Gazette 2007/32)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.02.2006 JP 2006024345**
**08.09.2006 JP 2006244677**

(71) Applicant: **Sharp Kabushiki Kaisha**
**Osaka-shi, Osaka 545-8522 (JP)**

(72) Inventors:
• **YOSHIMOTO, Takashi**
**Chiba 266-0005 (JP)**
• **IMAMURA, Kimihiko**
**Washington 98684 (US)**
• **OKAMOTO, Naoki**
**Chiba 262-0019 (JP)**

(74) Representative: **Brown, Kenneth Richard et al**
**R.G.C. Jenkins & Co.**
**26 Caxton Street**
**London SW1H 0RJ (GB)**

(54) **SIGNAL SEPARATING APPARATUS, COMMUNICATION APPARATUS AND SIGNAL SEPARATING METHOD**

(57)   To provide a signal separating apparatus for determining a channel signal cancellation order to cancel channel signals from a received signal including a plurality of code-multiplexed channel signals, based on spreading code sequences multiplexed by respective channel signals, and according to the determined channel signal cancellation order, separating each channel signal from the received signal. A signal separating apparatus which cancels channel signals from code-multiplexed channel signals multiplied by spreading code sequences based on spreading code sequence information about the spreading code sequences, and which has a signal cancellation order determining section 110 which receives the spreading code sequence information input thereto, and based on the input spreading code sequence information, determines a channel cancellation order for canceling channel signals, and a signal canceling section 120 that cancels channel signals from a received signal according to the channel signal cancellation order determined by the signal cancellation order determining section 110.

FIG. 1

**Description**

Technical Field

The present invention relates to signal cancellation order determining means for determining an order to cancel channel signals from a received signal.

Background Art

For example, on the transmitting side in an MC-CDMA (Multi-Carrier Code Division Multiple Access) scheme and OFCDM (Orthogonal Frequency and Code Division Multiplexing) scheme, an information symbol is repeated (copied) on successive subcarriers corresponding to the spreading factor, and a spreading code is multiplied by the repeated subcarriers (hereinafter, referred to as frequency-axis spreading). Symbols of the subcarriers are subjected to frequency-axis spreading with a separatable spreading code, and it is thereby possible to perform code multiplexing. The receiving side performs despreading using the spreading code used by spreading a desired information symbol, extracts the desired information symbol, and decodes the information transmitted by each subcarrier to perform demodulation processing. The MC-CDMA scheme and OFCDM scheme that operate as described above are described in Non-patent Document 1, for example.

On the receiving side in the MC-CDMA scheme and OFCDM scheme, to obtain an information symbol from a code-multiplexed signal with accuracy, the orthogonality among spreading code sequences needs be maintained with excellence. However, in a mobile communication environment, due to frequency selective fading, it sometimes happens that the amplitude and phase of a signal representing an information symbol vary, and that the orthogonality among codes deteriorates.

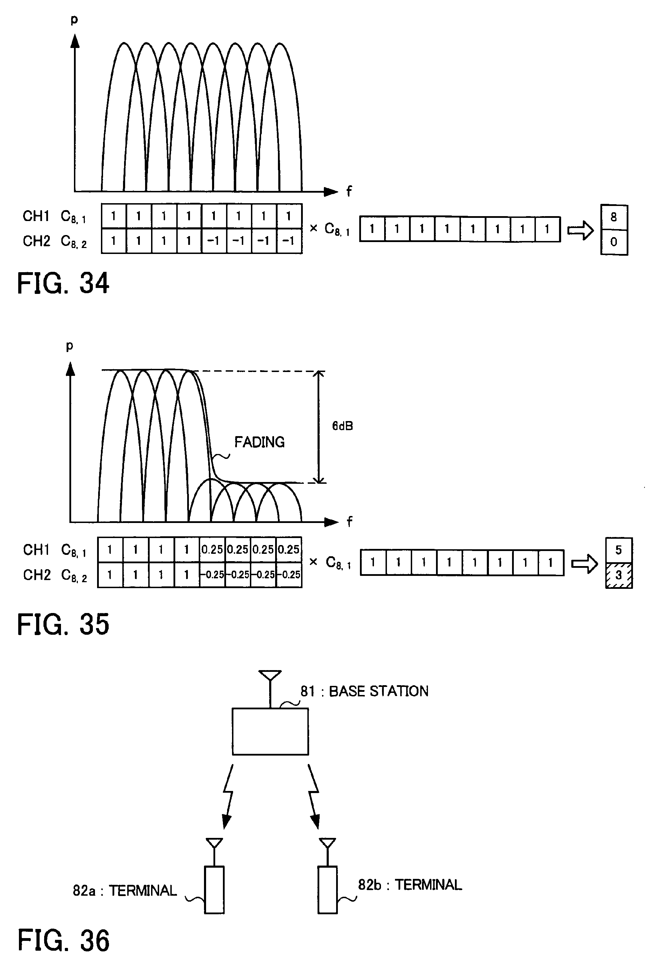

FIG.34 shows an example of a despreading processing result without fading, and FIG.35 shows an example of a despreading processing result with fading.

FIG.34 shows the case where a spreading code $C_{8.1}$ is multiplied by subcarriers on channel CH1, while a spreading code $C_{8.2}$ is multiplied by subcarriers on channel CH2, a code-multiplexed signal on CH1 and CH2 is transmitted through a propagation path without fading, and the receiving side performs the despreading processing with the spreading code $C_{8.1}$ multiplied on CH1. As a result of the despreading processing, components of CH2 multiplied by the spreading code $C_{8.2}$ are "0", and the orthogonality is maintained between CH2 and CH1.

FIG.35 shows the case where a spreading code $C_{8.1}$ is multiplied by subcarriers on channel CH1, while a spreading code $C_{8.2}$ is multiplied by subcarriers on channel CH2, a code-multiplexed signal on CH1 and CH2 is transmitted through a propagation path with fading, and the receiving side performs the despreading processing with the spreading code $C_{8.1}$ multiplied on CH1 . As a result of the despreading processing, components of CH2 multiplied by the spreading code $C_{8.2}$ are "3" and interfering components to CH1, and the orthogonality deteriorates.

As shown in FIG.35, when the receiving side performs the despreading processing with the orthogonality between spreading code sequences degraded, interfering components by signals except a desired information symbol increase, the information symbol cannot be extracted with accuracy, and a problem arises that the transmission quality deteriorates.

As the technique for solving such a problem, there exists a Successive Interference Canceller (hereinafter, abbreviated as SIC) as shown in Non-patent Documents 2 and 3. The SIC as disclosed in Non-patent Documents 2 and 3 is of technique for performing despreading, demodulation and decoding on a channel signal in descending of received signal power, or SINR (Signal to Interference plus Noise Power Ratio) of the channel signal among code-multiplexed received signals, obtaining a decision signal of an information symbol, and subtracting a replica signal generated using the decision result from the received signals. By repeating such procedures, it is possible to cancel signals except the desired channel signal with accuracy, and suppress performance degradation caused by deterioration of the orthogonality between spreading code sequences.

Thus, by calculating an information signal of each channel from a signal obtained by sequentially subtracting FFT output signals in the signal cancellation order determined using the received signal power or SINR of each channel, it is possible to suppress performance degradation caused by deterioration of the orthogonality between spreading code sequences.

Non-patent Document 1: Maeda, Atarashi, Abeta, Sawahasi, "VSF-OFCDM using two-dimensional spreading and its performance", IEICE Technical Report RCS2002-61, May, 2002

Non-patent Document 2: Ishihara, Takeda, Adachi, "DS-CDMA frequency-domain multi-access interference canceller", IEICE Technical Report RCS2004-316, January, 2005

Non-patent Document 3: Akita, Suyama, Fukawa, Suzuki, "New interference cancellers for downlink MC-CDMA with transmit power control", IEICE Technical Report RCS2002-35, April, 2002

Disclosure of Invention

Problems to be Solved by the Invention

However, in determining the channel signal cancellation order based on an estimation result of propagation path conditions such as the received signal power, SINR and the like of each channel signal as in the SIC as shown in Non-patent Documents 2 and 3, when the SINR or received signal power of each channel signal is the same in the received signal, it is not possible to effectively determine the order for generating a replica signal and subtracting each channel signal from the received signal in separating each channel signal.

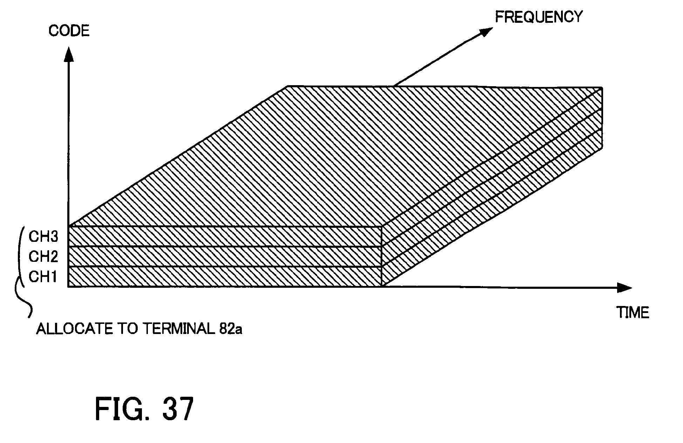

For example, as shown in FIG.36, a base station 81 on the transmitting side concurrently transmits code-multiplexedsignals (subjected to CDM: CodeDivision Multiplexing) with the same signal power on each channel to a plurality of terminals, 82a and 82b. Meanwhile, as shown in FIG.37, there is a case that the base station 81 assigns a plurality of code-multiplexed channel signals to a single terminal among all channel signals concurrently subjected to CDM for a plurality of terminals, and in FIG.37, the terminal 82a gains all of CH1, CH2 and CH3 subjected to CDM. When the base station 81 transmits all the channel signals with the same signal power, all the channel signals undergo the same frequency fading, and a difference does not arise in the received signal power or SINR of each channel. In such a case, the terminals 82a and 82b on the receiving side are not able to determine the order for canceling non-desired signals using the received signal power or SINR for each channel, and thus not able to effectively determine the order for subtracting each channel signal from the received signal in separating each channel signal.

The present invention is carried out in view of such circumstances, and it is an object of the invention to provide a signal separating apparatus, communication apparatus and signal separating method for determining a channel signal cancellation order to cancel channel signals from a received signal including a plurality of code-multiplexed channel signals, based on spreading code sequences multiplexed by respective channel signals, and according to the determined channel signal cancellation order, separating each channel signal from the received signal.

Means for Solving the Problem

(1) To achieve the above-mentioned object, a signal separating apparatus according to the invention is a signal separating apparatus that cancels channel signals from a plurality of code-multiplexed channel signals multiplied by spreading code sequences based on spreading code sequence information about the spreading code sequences, and is characterized by having a signal cancellation order determining section which receives the spreading code sequence information input thereto, and based on the input spreading code sequence information, determines a channel cancellation order for canceling channel signals, and a signal canceling section that cancels part of channel signals from the plurality of channel signals according to the determined channel signal cancellation order.

Thus, according to the signal separating apparatus according to the invention, it is possible to determine the order for canceling channel signals carried on respective channels from a received signal based on the spreading code sequences. It is thereby possible to cancel a channel signal carried on the channel multiplied by the spreading code sequence maintaining the orthogonality. Further, irrespective of an estimation value of the propagation path of the received signal and received signal power, by acquiring the information about the spreading code sequences multiplied by the received signal, it is possible to determine the order uniquely. Accordingly, non-desired channel signals can be cancelled with accuracy even when the received signal power or SINR is the same, and it is possible to efficiently suppress performance degradation caused by deterioration of the orthogonality among spreading code sequences.

(2) Further, in the signal separating apparatus according to the invention, the signal cancellation order determining section is characterized by calculating a code extraction accuracy value indicative of a degree of maintenance of orthogonality between a spreading code sequence multiplied by a desired channel signal and a spreading code sequence multiplied by a non-desired channel signal, and based on a level of the calculated code extraction accuracy value, determining the channel cancellation order.

Thus, the signal cancellation order determining section is capable of determining the channel cancellation order based on the code extraction accuracy value indicative of a degree of maintenance of orthogonality between the spreading code sequence multiplied by the desired channel signal and the spreading code sequence multiplied by the non-desired channel signal. It is thereby possible to determine the channel cancellation order based on characteristics of the spreading code sequences, and the non-desired channel signal can be cancelled with accuracy even when the received signal power or SINR is the same.

(3) Further, in the signal separating apparatus according to the invention, the signal cancellation order determining section is characterized by having a correlation duration determining section that sets a value less than or equal to a length of the spreading code sequence as a correlation duration length, a correlation value calculating section that calculates a correlation value between the spreading code sequence multiplied by the desired channel signal and the spreading code sequence multiplied by the non-desired channel signal for the set correlation duration length, a code extraction accuracy calculating section that calculates a code extraction accuracy value using the calculated correlation value, and an order determining section that determines the channel cancellation order starting with a channel signal multiplied by a spreading code sequence with a higher degree of maintenance of orthogonality in descending order of the maintenance of orthogonality based on the calculated code extraction accuracy value.

Thus, according to the signal cancellation order determining section, it is possible to calculate a correlation value between the spreading code sequence multiplied by the desired channel signal and the spreading code sequence multiplied by the non-desired channel signal for a predetermined correlation duration length, and to determine the channel cancellation order based on the calculated correlation value. By this means, based on the correlation between two spreading code sequences, it is possible to cancel the non-desired channel signal with accuracy.

(4) In the signal separating apparatus according to the invention, features are that the correlation duration setting section sets a correlation duration length less than the length of the spreading code sequence, the correlation value calculating section assigns the set correlation duration length to different positions of the spreading code sequence to calculate a plurality of correlation values, and that the code extraction accuracy calculating section adds the calculated plurality of correlation values to calculate the code extraction accuracy value.

Thus, the correlation duration setting section sets a correlation duration length shorter than the length of the spreading code sequence, the correlation value is calculated by shifting the set correlation duration length, and it is thereby possible to cancel the non-desired channel signal with accuracy based on the characteristics of the spreading code sequence.

(5) In the signal separating apparatus according to the invention, the correlation duration setting section is characterized by setting a duration obtained by dividing the spreading code sequence by $2^n$ (n is a positive integer) as a correlation duration length.

Thus, according to the correlation duration setting section, when spreading code sequences of OVSF code (Orthogonal Variable Spreading Factor) are used, it is possible to calculate a correlation value using a plurality of correlation value lengths. Further, by using $2^n$ to set a correlation duration length, it is possible to calculate a correlation value reflecting characteristics of the spreading code sequences. Irrespective of the estimation value of the propagation path of the received signal and received signal power, by acquiring the information about the spreading code sequences multiplied by the received signal, it is possible to determine the order uniquely.

(6) In the signal separating apparatus according to the invention, the correlation duration setting section is characterized by setting a correlation duration length based on a reciprocal of delay spread.

Thus, according to the correlation duration setting section, it is possible to suppress a calculation amount to calculate the correlation value based on the propagation path environment.

(7) In the signal separating apparatus according to the invention, the correlation duration setting section is characterized by setting a duration shorter than a length of a multiple of the reciprocal of delay spread as a correlation duration length.

Thus, according to the correlation duration setting section, it is possible to select a suitable correlation duration length corresponding to the length of the spreading code sequence based on the propagation path environment, and to suppress a calculation amount to calculate the correlation value.

(8) In the signal separating apparatus according to the invention, the signal cancellation order determining section is characterized by having a generation code tree storing section that stores information about a generation code tree to generate the spreading code sequences, a code dividing section that divides the generation code tree into a plurality of blocks using a duration of a higher code to generate spreading code sequences, a code extraction accuracy calculating section that calculates the number of spreading code sequences multiplied by respective channel signals among spreading code sequences included in the divided block as a code extraction accuracy value, and an order determining section that determines a channel cancellation order starting with a channel signal multiplied by a spreading code sequence with a higher degree of maintenance of orthogonality in descending order of the maintenance of orthogonality based on the calculated code extraction accuracy value.

Thus, according to the signal cancellation order determining section, it is possible to determine the channel signal cancellation order using a code generation tree to generate the spreading code sequences. It is thereby possible to suppress a calculation amount to calculate the code extraction accuracy value, and to determine the channel signal cancellation order with ease.

(9) In the signal separating apparatus according to the invention, the signal cancellation order determining section is characterized by having a code extraction accuracy storing section that stores a code extraction accuracy value obtained by calculating a degree of maintenance of orthogonality between a spreading code sequence multiplied by a desired channel signal and a spreading code sequence multiplied by a non-desired channel signal based on the spreading code sequence information, a code extraction accuracy searching section which analyzes the spreading code sequence multiplied by each channel signal of the received signal based on the spreading code sequence information, searches the code extraction accuracy storing section, and acquires the code extraction accuracy value corresponding to the analyzed spreading code sequence, and an order determining section that determines a channel cancellation order starting with a channel signal multiplied by a spreading code sequence with a higher degree of maintenance of orthogonality in descending order of the maintenance of orthogonality based on the acquired code extraction accuracy value.

Thus, according to the signal separating apparatus of the invention, since the code extraction accuracy value is beforehand calculated and stored in the storage area, it is possible to suppress a calculation amount to calculate the code extraction accuracy value. It is thereby possible to reduce the time required to determine the channel signal cancellation order, and to suppress the time required for demodulation of the received signal. Further, non-desired channel signals can be cancelled with accuracy even when the received signal power or SINR is the same, and it is possible to efficiently suppress performance degradation caused by deterioration of the orthogonality among spreading code sequences.

(10) In the signal separating apparatus according to the invention, the code extraction accuracy storing section is characterized by calculating a correlation value between the spreading code sequence multiplied by the desired channel signal and the spreading code sequence multiplied by the non-desired channel signal for the set correlation duration length, and storing a code extraction accuracy value calculated by using the calculated correlation value.

Thus, as a code extraction accuracy value, based on the correlation value between the spreading code sequences, it is possible to use the code extraction accuracy value reflecting characteristics of the spreading code sequences.

(11) In the signal separating apparatus according to the invention, the code extraction accuracy storing section is characterized by dividing the generation code tree into a plurality of blocks using a duration of a higher code to generate spreading code sequences, and storing a code extraction accuracy value obtained by calculating the number of spreading code sequences multiplied by respective channel signals among spreading code sequences included in the divided block.

Thus, it is possible to use the code extraction accuracy value that is calculated based on a generation code tree.

(12) In the signal separating apparatus according to the invention, the signal cancellation order determining section is characterized by having a generation code tree storing section that stores information about a generation code tree to generate the spreading code sequences, a code generation distance calculating section that calculates a kinship distance between spreading code sequences based on the information about the generation code tree, and an order determining section that determines a channel cancellation order starting with a channel signal multiplied by a spreading code sequence with a higher degree of maintenance of orthogonality in descending order of the maintenance of orthogonality based on the kinship distance calculated by the code generation distance calculating section.

Thus, by calculating a kinship distance between spreading code sequences based on the code generation tree, it is possible to determine the order of spreading code sequences easier to maintain the orthogonality. Further, as compared with the case of determining the order using the correlation value, the calculation can be made easily.

(13) In the signal separating apparatus according to the invention, features are that the order determining section repeats selecting a spreading code sequence with a higher degree of maintenance of orthogonality based on the kinship distance, notifying the code generation distance calculating section of the selected spreading code sequence, acquiring a kinship distance between spreading code sequences that is calculated again by the code generation distance calculating section while omitting the notified spreading code sequence, and sequentially selecting a spreading code sequence with a higher degree of maintenance of orthogonality based on the acquired kinship distance, and determines a channel cancellation order in the order in which the spreading code sequence multiplied by a channel signal is selected, and that the code generation distance calculating section acquires the spreading code sequence selected by the order determining section, calculates a kinship distance between spreading code sequences except the acquired spreading code sequence, and outputs the calculated kinship distance between spreading code sequences to the order determining section.

Thus, by calculating a kinship distance again whenever selecting a spreading code sequence to cancel, it is possible to acquire a kinship distance with the channel signal multiplied by the selected code spreading sequence canceled, and to enhance the accuracy to select spreading code sequences easier to maintain the orthogonality.

(14) In the signal separating apparatus according to the invention, features are that the order determining section repeats selecting a spreading code sequence with a higher degree of maintenance of orthogonality based on the calculated code extraction accuracy value, notifying the code extraction accuracy calculating section of the selected spreading code sequence, acquiring a code extraction accuracy value between spreading code sequences that is calculated again by the code extraction accuracy calculating section while omitting the notified spreading code sequence, and sequentially selecting a spreading code sequence with a higher degree of maintenance of orthogonality based on the acquired code extraction accuracy value between spreading code sequences, and determines a channel cancellation order in the order in which the spreading code sequence multiplied by a channel signal is selected, and that the code extraction accuracy calculating section acquires the selected spreading code sequence from the order determining section, calculates a code extraction accuracy value between spreading code sequences except the acquired spreading code sequence, and outputs the calculated code extraction accuracy value between spreading code sequences to the order determining section.

Thus, by calculating a code extraction accuracy value again whenever selecting a spreading code sequence to cancel, it is possible to acquire a code extraction accuracy value with the channel signal multiplied by the selected code spreading sequence canceled, and to enhance the accuracy to select spreading code sequences easier to maintain the orthogonality.

(15) A signal separating apparatus according to the invention is a signal separating apparatus that cancels channel signals from a plurality of code-multiplexed channel signals multiplied by spreading code sequences based on spreading code sequence information about the spreading code sequences, and is characterized by having a cancellation order storing section that stores a signal cancellation order which is determined from a degree of maintenance of orthogonality between a spreading code sequence multiplied by a desired channel signal and a spreading code sequence multiplied by a non-desired channel signal based on the spreading code sequence information, an order determining section which acquires the signal cancellation order from the cancellation order storing section based on the spreading code sequence information, and determines an order for canceling channel signals multiplied by spreading code sequences from the acquired signal cancellation order, and a signal canceling section that cancels part of channel signals from the plurality of channel signals according to the determined order of canceling channel signals.

Thus, since a signal cancellation order is beforehand calculated using characteristics of spreading code sequences multiplied by a received signal and stored in the storage area, it is possible to suppress the amount of calculation such as calculation of code extraction accuracy values and the like required to determine a signal cancellation order. It is thereby possible to reduce the time required to determine the channel signal cancellation order, and to suppress the time required for demodulation of the received signal.

(16) In the signal separating apparatus according to the invention, the cancellation order storing section is characterized by calculating a kinship distance between spreading code sequences of a spreading code sequence multiplied by a desired channel signal and a spreading code sequence multiplied by a non-desired channel signal, and storing a signal cancellation order obtained by determining a channel cancellation order starting with a channel signal multiplied by a spreading code sequence with a higher degree of maintenance of orthogonality in descending order of the maintenance of orthogonality based on the calculated kinship distance.

Thus, by storing in the storage area the signal cancellation order that is beforehand determined based on the kinship distance, the calculation amount is suppressed, and it is possible to suppress the time required for demodulation of a received signal. Particularly, when spreading code sequences used in the communication system are beforehand determined corresponding to the number of multiplexes, since the information amount of the signal cancellation order to store in the storage area can be reduced, it is possible to suppress the storage area amount and the search time for the signal cancellation order.

(17) In the signal separating apparatus according to the invention, the cancellation order storing section is characterized by calculating a correlation value between a spreading code sequence multiplied by a desired channel signal and a spreading code sequence multiplied by a non-desired channel signal for a beforehand set correlation duration length, calculating a code extraction accuracy value indicative of a degree of maintenance of orthogonality between the spreading code sequence multiplied by the desired channel signal and the spreading code sequence multiplied by the non-desired channel signal using the calculated correlation value, and storing a signal cancellation order that is determined based on the calculated code extraction accuracy value.

Thus, by storing in the storage area the signal cancellation order that is beforehand determined based on the correlation value between spreading code sequences, the calculation amount is suppressed, and it is possible to suppress the time required for demodulation of a received signal. Particularly, when spreading code sequences used in the communication system are beforehand determined corresponding to the number of multiplexes, since the information amount of the signal cancellation order to store in the storage area can be reduced, it is possible to suppress the storage area amount and the search time for the signal cancellation order.

(18) In the signal separating apparatus according to the invention, the cancellation order storing section is characterized by dividing a generation code tree into a plurality of blocks using a duration of a higher code to generate spreading code sequences, calculating a code extraction accuracy value indicative of a degree of maintenance of orthogonality between the spreading code sequence multiplied by the desired channel signal and the spreading code sequence multiplied by the non-desired channel signal using the number of spreading code sequences multiplied by respective channel signals among spreading code sequences included in divided blocks, and storing a signal cancellation order determined from the calculated code extraction accuracy value.

Thus, by storing in the storage area the signal cancellation order that is beforehand determined based on the number of spreading code sequences multiplied by channel signals included in the divided block of the generation code tree, the calculation amount is suppressed, and it is possible to suppress the time required for demodulation of a received signal. Particularly, when spreading code sequences used in the communication system are beforehand determined corresponding to the number of multiplexes, since the information amount of the signal cancellation order to store in the storage area can be reduced, it is possible to suppress the storage area amount and the search time for the signal cancellation order.

(19) Further, in the signal canceling apparatus according to the invention, it is a feature that the spreading factor of the spreading code sequence varies with each channel signal.

Thus, according to the signal separating apparatus according to the invention, even when the spreading factor of the spreading code sequence varies with each channel signal, it is possible to determine an order for canceling channel signals carried on respective channels from a received signal. By this means, it is possible to cancel a channel signal carried on the channel multiplied by a spreading code sequence maintaining the orthogonality.

(20) A communication apparatus according to the invention is characterized by having a receiving section that receives a plurality of code-multiplexed channel signals multiplied by spreading code sequences, and spreading code sequence information about the spreading code sequences, and the signal separating apparatus as described in any one of above-mentioned (1) to (19).

Thus, according to the communication apparatus according to the invention, it is possible to determine the order for canceling channel signals carried on respective channels from a received signal based on the spreading code sequences. It is thereby possible to cancel a channel signal carried on the channel multiplied by a spreading code sequence maintaining the orthogonality. Further, irrespective of an estimation value of the propagation path of the received signal and received signal power, by acquiring the information about the spreading code sequences multiplied by the received signal, it is possible to determine the order uniquely. Accordingly, non-desired channel signals can be cancelled with accuracy even when the received signal power or SINR is the same, and it is possible to efficiently suppress performance degradation caused by deterioration of the orthogonality among spreading code sequences.

(21) In the communication apparatus according to the invention, features are that the receiving section receives a control channel signal including (describing, holding) the spreading code sequence information, and that the apparatus further has a control channel reconstruction section that reconstructs the control channel signal to acquire the spreading code sequence information.

Thus, by holding the spreading code sequence information in the control channel, it is possible to reduce the timing for acquiring the spreading code sequence information, and the processing time can be shortened by applying the acquired spreading code sequence information to a plurality of information data and demodulating the received signal.

(22) A signal separating method according to the invention is a signal separating method for canceling part of channel signals from a plurality of code-multiplexed channel signals multiplied by spreading code sequences based on spreading code sequence information about the spreading code sequences, and is characterized by receiving the spreading code sequence information, determining a channel cancellation order for canceling channel signals based on the input spreading code sequence information, and canceling part of channel signals from the plurality of channel signals according to the determined channel signal cancellation order.

Thus, according to the signal separating method according to the invention, it is possible to determine the order for canceling channel signals carried on respective channels from a received signal based on the spreading code sequences. It is thereby possible to cancel a channel signal carried on the channel multiplied by a spreading code sequence maintaining the orthogonality. Further, irrespective of an estimation value of the propagation path of the received signal and received signal power, by acquiring the information about the spreading code sequences multiplied by the received signal, it is possible to determine the order uniquely. Accordingly, non-desired channel signals can be cancelled with accuracy even when the received signal power or SINR is the same, and it is possible to efficiently suppress performance degradation caused by deterioration of the orthogonality among spreading code sequences.

Advantageous Effect of the Invention

According to the invention, it is possible to determine a channel signal cancellation order for canceling channel signals from a received signal including a plurality of code-multiplexed channel signals based on spreading code sequences multiplied by the channel signals, and to separate each channel signal from the received signal according to the determined channel signal cancellation order.

Brief Description of Drawings

FIG.1 is a block diagram showing an example of a configuration of a receiving apparatus according to the first embodiment of the invention;
FIG.2 is a block diagram showing an example of a configuration of a signal cancellation order determining section of the first embodiment;

FIG.3 is a block diagram showing an example of a configuration of a signal canceling section of the first embodiment;

FIG. 4 is a diagram showing the principle of operation of the signal canceling section of the first embodiment;

FIG.5 is a flowchart illustrating an example of operation for determining a channel signal cancellation order of the first embodiment;

FIG.6 is a diagram showing an example where the receiving apparatus receives a code-multiplexed signal;

FIG.7 is a diagram showing an example of procedures of correlation value calculation;

FIG. 8 is a flowchart showing an example of operation for determining a channel signal cancellation order of the second embodiment;

FIG.9 is a diagram showing an example of OVSF code sequences;

FIG.10 is a diagram showing an example of a code-multiplexed signal transmitted from the transmitting side;

FIG.11 is a diagram showing an example of a state of a signal obtained by the receiving side receiving the signal as shown in FIG.10;

FIG.12 is a diagram showing a despreading result with $C_{8,1}$ in the case of receiving the spreading code sequences of FIG.11;

FIG.13 is a diagram showing a correlation value calculation result with the correlation duration length d of "4" (d=4) and circulation shift amount s of "0" (s=0) in the case of receiving the spreading code sequences of FIG.11;

FIG.14 is a block diagram showing an example of a configuration of a signal cancellation order determining section of the third embodiment;

FIG. 15 is a flowchart showing an example of operation for determining a signal cancellation order of the third embodiment;

FIG.16 is a diagram showing a generation code tree in SF=16;

FIG.17 is a block diagram showing an example of a configuration of a signal cancellation order determining section of the fourth embodiment;

FIG.18 is a flowchart showing an example of operation for determining a signal cancellation order of the fourth embodiment;

FIG.19 is a block diagram showing an example of a configuration of a signal cancellation order determining section of the fifth embodiment;

FIG.20 is a diagram showing an example of a generation code tree of OVSF code sequences with SF=16;

FIG.21 is a block diagram showing an example of a configuration of a signal cancellation order determining section of the sixth embodiment;

FIG. 22 is a flowchart showing an example of operation for determining a signal cancellation order of the sixth embodiment;

FIG.23 is a diagram showing kinship distances and the sum totals in the generation code tree as shown in FIG.20;

FIG.24 is a diagram showing an example of spreading code sequences targeted for calculation of the kinship distance between spreading code sequences in a code generation distance calculating section after the order determining section selects a single spreading code sequence;

FIG.25 is a diagram showing kinship distances and the sum totals in the generation code tree as shown in FIG.24;

FIG.26 is a block diagram showing an example of a configuration of a signal cancellation order determining section of the seventh embodiment;

FIG.27A-27C are diagrams showing examples of a signal cancellation order table stored in a cancellation order storing section, where FIG.27A shows an example of spreading code sequences multiplied when the number of multiplexes is "4" and the cancellation order, FIG.27B shows an example of spreading code sequences multiplied when the number of multiplexes is "8" and the cancellation order, and FIG.27C shows an example of spreading code sequences multiplied when the number of multiplexes is "12" and the cancellation order;

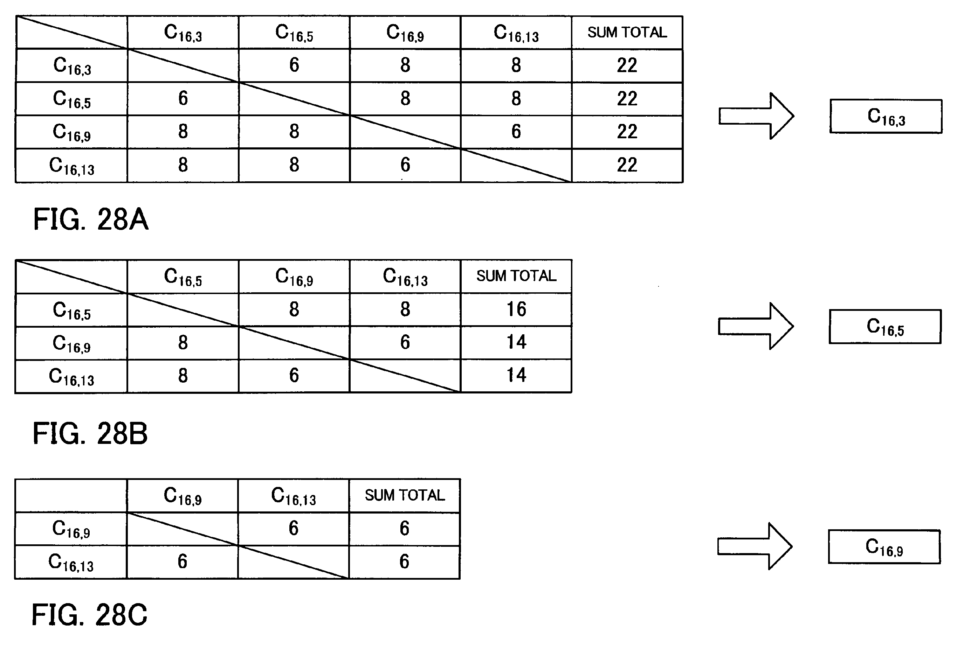

FIG.28A-28C are diagrams showing the case where the cancellation order is determined using the means as described in the sixth embodiment, where FIG.28A shows kinship distances of spreading code sequences $C_{16,3}$, $C_{16,5}$, $C_{16,9}$ and $C_{16,13}$ multiplied when the number of multiplexes is "4", and the sum totals, FIG.28B shows kinship distances of spreading code sequences $C_{16,5}$, $C_{16,9}$ and $C_{16,13}$ except $C_{16,3}$, and the sum totals, and FIG.28C shows kinship distances of spreading code sequences $C_{16,9}$ and $C_{16,13}$ except $C_{16,3}$ and $C_{16,5}$, and the sum totals;

FIG.29 is a block diagram showing an example of a configuration of a receiving apparatus of the eighth embodiment;

FIG. 30 is a diagram showing an example of a reception signal format of the eighth embodiment;

FIG. 31 is a sequence diagram illustrating an example of exchange of the control channel and information data channel;

FIG.32 is another sequence diagram illustrating an example of exchange of the control channel and information data channel;

FIG. 33 is a sequence diagram illustrating an example of exchange of the information data channel when the spreading code sequence information is beforehand known between a base station and a terminal;

FIG. 34 shows an example of a despreading processing result in the case where a signal does not undergo fading;

FIG. 35 shows an example of a despreading processing result in the case where a signal undergoes fading:

FIG.36 is a diagram showing an example of a configuration of a wireless communication system;

FIG.37 is a diagram of an example of allocating a plurality of channels to a single terminal;

FIG.38 is a diagram showing an example of a generation code tree of OVSF code sequences with SF=16; and

FIG.39 is a diagram showing a code-multiplexed signal obtained by multiplying channels by spreading code sequences dashed-line circled in FIG.38 in MC-CDM as an example of a code-multiplexed received signal of channels multiplied by spreading code sequences with different spreading factors.

Description of Symbols

100 200 Receiving apparatus
101 Antenna
102 Signal shaping section
103 Serial-parallel transforming section
104 FFT section
105 Propagation path estimating section
106 Weighting coefficient calculating section
107 MAC section
110, 140, 150, 160, 170, 180 Signal cancellation order determining section
111, 155, 164, 183 Spreading code generating section
112, 143 Correlation duration determining section
113 Correlation value calculating section
114, 153 Code extraction accuracy calculating section
115, 154, 163, 172, 182 Order determining section
120 Signal canceling section
121 Switching section
122 Replica generating section
123 Coding section
124 Modulation section
125 Serial-parallel transforming section
126 Spreading section
127 Propagation path characteristic weighting section
128 Subtracting section
130, 130a~130c Each-channel signal processing section
131 Propagation path distortion correcting section
132 Despreading section
133 Parallel-serial transforming section
134 Demodulation section
135 Error correcting decoding section
141 Delay spread calculating section
142 Frequency variation pitch calculating section
151 Generation code tree storing section
152 Code dividing section
161 Code extraction accuracy storing section
162 Code extraction accuracy searching section
171 Code generation distance calculating section
181 Cancellation order storing section
201 Control channel reconstruction section

Best Mode for Carrying Out the Invention

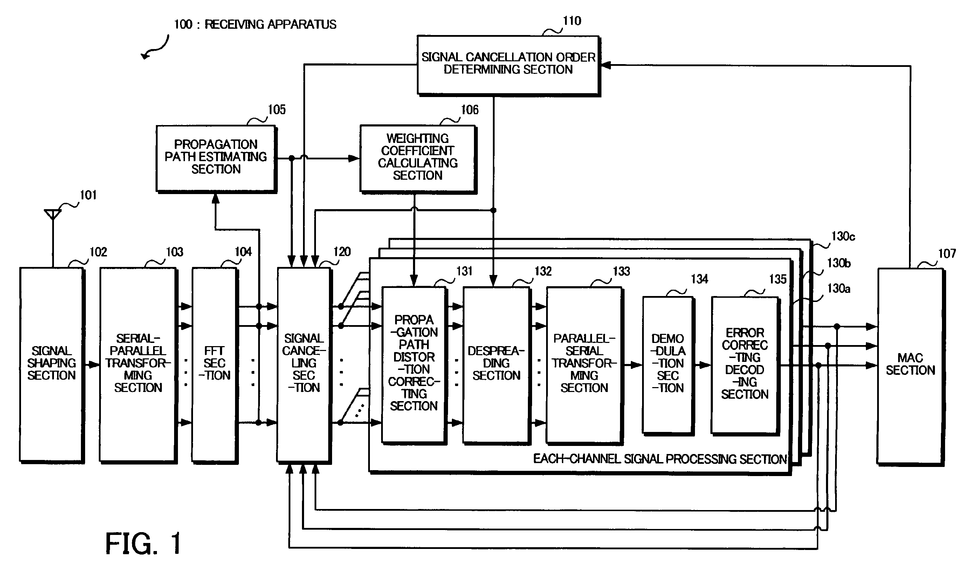

Embodiments of the invention will be described below with reference to accompanying drawings. In each figure, structural elements and equivalent portions having the same structure or function are assigned the same reference numerals to omit descriptions thereof. In this description, when a plurality of same structural elements exists and needs be distinguished, a suffix is added to the reference numeral to distinguish a plurality of structural elements from one another. For example, FIG. 1 shows each-channel signal processing sections 130a to 130c, and the case of describing an each-channel signal processing section 130 indicates any one or more of a plurality of each-channel signal processing sections, 130a to 130c, while the case of adding a suffix such as the each-channel signal processing section 130a distinguishes a plurality of each-channel signal processing sections, 130a to 130c, from one another to indicate.

Described below are embodiments of the signal cancellation order determining means in a signal separating apparatus (interference canceller) and receiving apparatus (an example of a communication apparatus) according to the invention. In addition, the following embodiments describe a wireless receiving apparatus to which the invention is applied in the case such as MC-CDMA, OFCDM and the like where spreading is carried out in the frequency-axis direction. However, the invention is applicable to the case of spreading in the time-axis direction, and is not limited to the case of spreading in the frequency-axis direction.

Further, as in downlink of the wireless communication system as shown in FIG.36, each of the following embodiments describes an example the case where a transmitting apparatus (for example, a base station 81) concurrently transmits code-multiplexed signals with the same signal power on each channel to receiving apparatuses (for example, terminals 82a and 82b) and allocates a plurality of channels to a single terminal. Further, as shown in FIG.37, the case is described as an example that a plurality of channels, CH1, CH2 and CH3, is allocated to a single receiving apparatus.

(First embodiment)
In the first embodiment, correlation is calculated between a spreading code sequence multiplied by a desired channel signal and a spreading code sequence multiplied by a non-desired channel signal, and a channel signal cancellation order is thereby determined to cancel channel signals.

FIG.1 is a block diagram showing an example of a configuration of a receiving apparatus according to the first embodiment of the invention. FIG.1 shows an example of an MC-CDMA type receiving apparatus in the case where three channels (CH1, CH2 and CH3) are code-multiplexed. The receiving apparatus 100 as shown in FIG.1 has an antenna 101, received signal shaping section 102, serial-parallel transforming section 103, FFT (Fast Fourier Transform) section 104, propagation path estimating section 105, weighting coefficient calculating section 106, MAC (Media Access Control) section 107, signal cancellation order determining section 110, signal canceling section 120 and each-channel signal processing sections 130a to 130c. The each-channel signal processing sections 130 are provided corresponding to the number of channels to process, and FIG.1 shows the case of three channels. The each-channel signal processing 130 has a propagation path distortion correcting section 131, despreading section 132, parallel-serial transforming section 133, demodulation section 134 and error correcting decoding section 135. Further, in the receiving apparatus 100 as shown in FIG.1, structural elements corresponding to the signal separating apparatus (interference canceller) include at least the signal cancellation order determining section 110, signal canceling section 120, and each-channel signal processing section 130, and may further include the propagation path estimating section 105 and weighting coefficient calculating section 106.

The signal shaping section 102 performs on a received signal received from the antenna 101 processing such as frequency conversion for downconverting to a frequency band enabling signal processing, conversion from an analog signal to a digital signal (A/D conversion), extraction (filtering processing) of only a signal of a desired band, removal of a guard interval (GI) added in the transmitting apparatus to avoid distortion caused by delayed versions, and the like to shape the signal.

The serial-parallel transforming section 103 performs serial-parallel transform on the output signal shaped by the signal shaping section 102.

The FFT section 104 transforms the output signal from the serial-parallel transforming section 103 from a time-domain signal to a frequency-domain signal.

The propagation path estimating section 105 estimates propagation path conditions such as amplitude of subcarriers, phase information, received signal power and the like based on a preamble of the received signal or a pilot symbol to calculate a propagation path estimation value.

The weighting coefficient calculating section 106 calculates a correction coefficient to correct each subcarrier corresponding to the propagation path conditions such as the amplitude, phase information and the like estimated by the propagation path estimating section 105.

The MAC section 107 is of an higher layer of each structural element as shown in FIG.1, and has at least the function of calculating spreading code sequences from the pilot channel or preamble where the spreading code sequence information is stored among outputs of the each-channel signal processing sections 130 and notifying the signal cancellation order determining section 110 of the calculated spreading code sequence information, and descriptions about the other functions thereof are omitted herein.

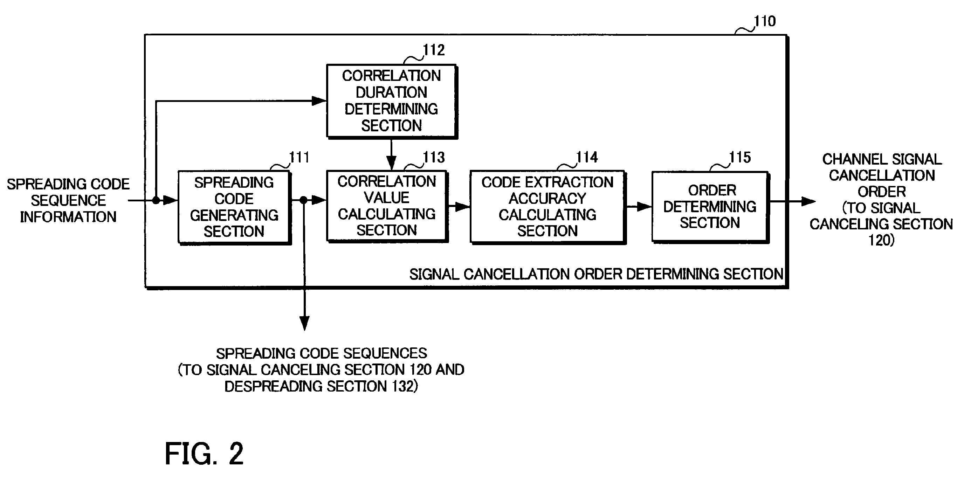

The signal cancellation order determining section 110 determines a channel signal cancellation order that is an order for canceling channels based on the spreading code sequence information notified from the MAC section 107. In this embodiment, the signal cancellation order determining section 110 generates spreading code sequences based on the spreading code sequence information, calculates a code extraction accuracy value indicative of a degree of maintenance of orthogonality between a spreading code sequence multiplied by a desired channel signal and a spreading code sequence multiplied by a non-desired channel signal, and based on a level of the calculated code extraction accuracy value, determines the channel signal cancellation order. The generated spreading code sequences are output to the signal canceling section 120 and despreading section 132, and the determined channel signal cancellation order is output to the signal canceling section 120. Specific descriptions will be given later with reference to FIG.2.

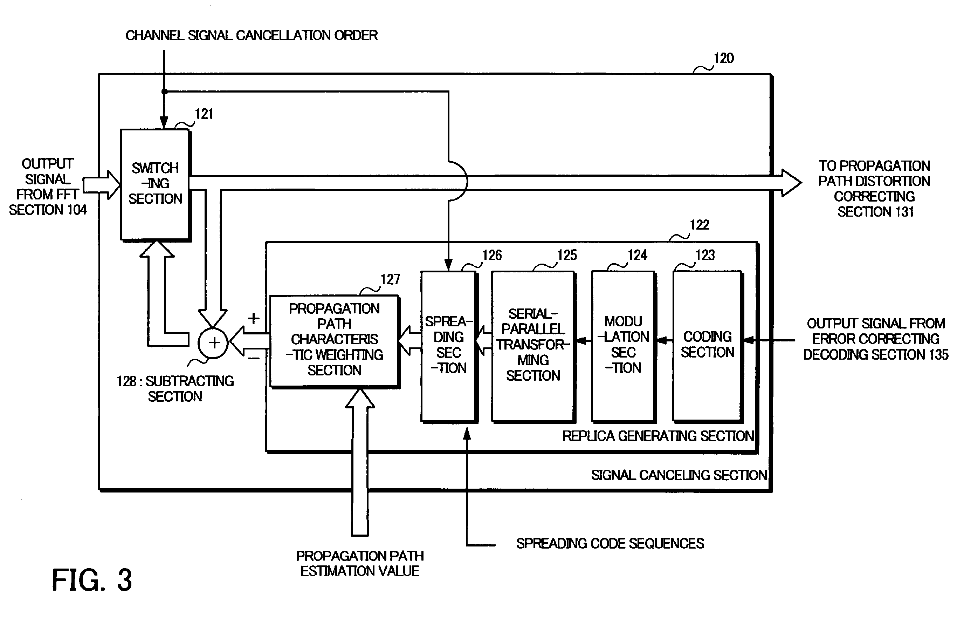

The signal canceling section 102 receives the channel signal cancellation order determined by the signal cancellation order determining section 110 and the spreading code sequences generated by the section 110, and cancels channel signals from an output signal from the FFT section 104 that is the received signal according to the input channel signal cancellation order. The signal canceling section 120 will be described later with reference FIG.3.

The each-channel signal processing section 130 performs processing to demodulate and decode the received signal with the channel signals (interfering components) cancelled by the signal canceling section 120. More specifically, the processing is actualized by following structural elements.

The propagation path distortion correcting section 131 corrects the amplitude of each subcarrier and phase variation by correction coefficients calculated in the weighting coefficient calculating section 106.

The despreading section 132 receives the spreading code sequence input from the signal cancellation order determining section 110, and by multiplying by the input spreading code sequence, extracts a desired information symbol.

The parallel-serial transforming section 133 performs parallel-serial transform on an output signal output from the despreading section 132.

The demodulation section 134 demodulates the information symbol subjected to modulation by a modulation scheme such as QPSK (Quadrature Phase Shift Keying), 16QAM (Quadrature Amplitude Modulation) or the like.

The error correcting decoding section 135 decodes a coded output signal output from the demodulation section 134. The section 135 is able to perform both of hard-decision decoding and soft-decision decoding.

The signal cancellation order determining section 110 will specifically be described below. FIG.2 is a block diagram showing an example of the configuration of the signal cancellation order determining section 110 of this embodiment. The signal cancellation order determining section 110 as shown in FIG.2 has a spreading code generating section 111, correlation duration determining section 112, correlation value calculating section 113, code extraction accuracy calculating section 114 and order determining section 115.

The spreading code generating section 111 generates spreading code sequences multiplied by the received signal from the spreading code sequence information notified from the MAC section 106.

The correlation duration determining section 112 determines a correlation duration length (duration) d to calculate a correlation value and circulation shift amount s from the spreading code sequence information. The correlation duration length d can be a numeric value of 1 or more and less than or equal to a length (hereinafter, also referred to as "SF" or "code length SF") of the spreading code sequence, and is preferably a numeric value more than 1 and less than SF (1<d<SF).

The correlation value calculating section 113 receives the spreading code sequences generated by the spreading code generating section 111 and correlation duration length d and circulation shift amount s determined by the correlation duration determining section 112, and calculates a correlation value between a spreading code sequence multiplied by a desired signal and a spreading code sequence multiplied by a non-desired signal according to the correlation duration length d and circulation shift amount s.

The code extraction accuracy calculating section 114 calculates a code extraction accuracy value by adding the correlation value calculated in the correlation value calculating section 113 for each spreading code sequence.

The order determining section 115 determines a cancellation order of channel signals according to code extraction accuracy values calculated in the code extraction accuracy calculating section 114, and outputs a channel signal cancellation order.

The signal canceling section 120 will specifically be described below. FIG.3 is a block diagram showing an example of the configuration of the signal canceling section 120 of this embodiment. The signal canceling section 120 as shown in FIG.3 has a switching section 121, replica generating section 122, coding section 123, modulation section 124, serial-parallel transforming section 125, spreading section 126, propagation path characteristic weighting section 127 and subtracting section 128.

The switching section 121 switches between an output signal from the FFT section 104 and an output from the subtracting section 128 according to the number of spreading code sequences and the number of subtractions in the subtracting section 128.

The replica generating section 122 receives an output signal output from the error correcting decoding section 135, and generates a received signal pattern assumed to be obtained by an output signal output from the transmitter (transmitting side) being passed through the propagation path from a result of decision in the error correcting decoding section 135. The replica generating section 122 is comprised of coding section 123, modulation section 124, serial-parallel transforming section 125, spreading section 126, and propagation path characteristic weighting section 127.

The coding section 123 performs error correcting coding again on an output signal from the error correcting decoding section 135. The modulation section 124 performs modulation on an output signal from the coding section 123 with a modulation scheme such as QPSK, 16QAM or the like. The serial-parallel transforming section 125 transforms an output from the modulation section 124 from serial to parallel. The spreading section 126 multiplies an output signal from the serial-parallel transforming section 125 by the spreading code sequence. The propagation path characteristic weighting section 127 multiplies an output signal from the spreading section 126 by a propagation path estimation value calculated in the propagation path estimating section 105.

The subtracting section 128 subtracts an output signal from the replica generating section 122 from an output signal from the switching section 121, and inputs the result again to the switching section 121.

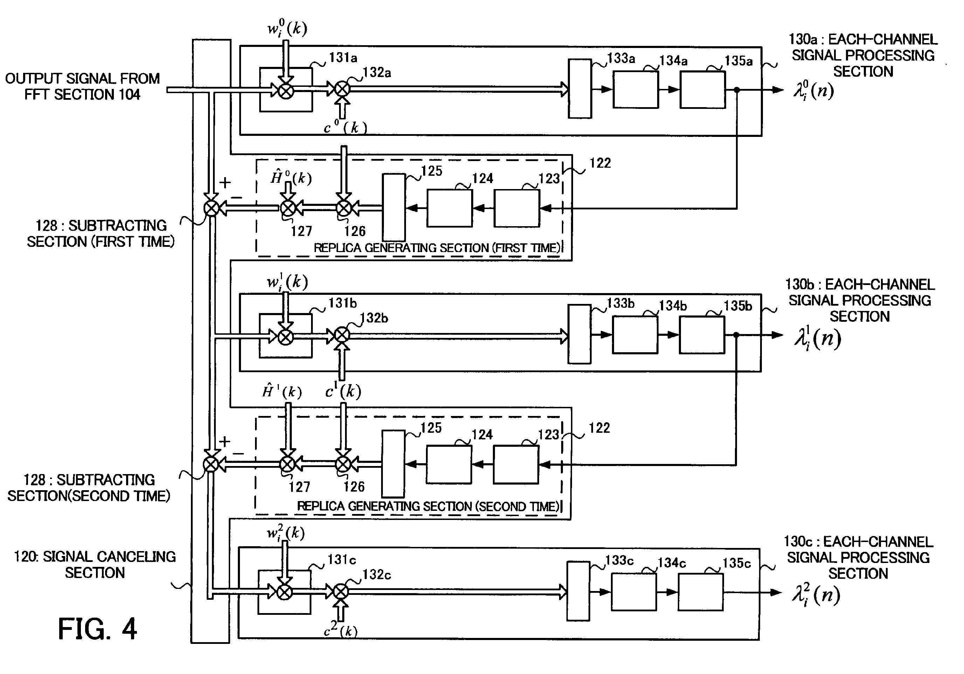

FIG.4 is a diagram showing an example of operation of the signal canceling section 120 of this embodiment. FIG.4 illustrates the operation as an example in the case that three channels (CH1 to CH3) are subjected to Code Division Multiple Access (CDMA), and shows the each-channel signal processing sections 130a to 130c and signal canceling section 120. Further, for the signal canceling section 120, the replica generating section 122 and subtracting section 128 corresponding to the first and second processing are shown, for example, as "replica generating section (first time)".

$w_i^0(k)$, $w_i^1(k)$ and $w_i^2(k)$ respectively represent weighting coefficients of CH1, CH2 and CH3 output from the weighting coefficient calculating section 106.

$\lambda_i^0(k)$, $\lambda_i^1(k)$ and $\lambda_i^2(k)$ are respectively assumed to be output signals output from error correcting decoding sections 135 of each-channel signal processing sections 130a to 130c.

$C_i^0(k)$, $C_i^1(k)$ and $C_i^2(k)$ are respectively assumed to be spreading code sequences multiplied by channels CH1, CH2 and CH3.

$H\hat{}_i^0(k)$ and $H\hat{}_i^1(k)$ are respectively assumed to be propagation path estimation results of channel CH1 and channel CH2 estimated by the propagation path estimating section 105.

In FIG.4, the channel CH1 is processed in the each-channel signal processing section 130a, the channel CH2 is processed in the each-channel signal processing section 130b, and the channel CH3 is processed in the each-channel signal processing section 130c. Further, FIG. 4 is based on the premise that code extraction accuracy values of CH1 to CH3 calculated by the code extraction accuracy calculating section 114 in the signal cancellation order determining section 110 are CH1<CH2<CH3, and that the order determining section 115 determines the channel signal cancellation order for canceling channel signals in the order of CH1, CH2 and CH3 to output to the switching section 121.

The switching section 121 determines the order for canceling channel signals as CH1, CH2 and CH3 according to the channel signal cancellation order determined in the signal cancellation order determining section 110.

In the first processing, the each-channel signal processing section 130a performs the processing based on an output signal from the FFT section 140, and outputs an output signal $\lambda_i^0(n)$, the replica generating section 122 generates a replica based on the output signal $\lambda_i^0(n)$ from the each-channel signal processing section 130a, and the subtracting section 128 subtracts the generated replica from the output signal from the FFT section 104 (first subtraction). In the second processing, the each-channel signal processing section 130b performs the processing based on an output signal from the subtracting section 128 in the first processing, and outputs an output signal $\lambda_i^1(n)$, the replica generating section 122 generates a replica based on the output signal $\lambda_i^1(n)$ output from the each-channel signal processing section 130b, and the subtracting section 128 subtracts the generated replica from the output signal from the subtracting section 128 in the first processing (second subtraction). Thus, the signal canceling section 120 cancels the interfering signal.

In addition, FIG.4 illustrates the case where the channel signal cancellation order is determined based on the code extraction accuracy value, but the same operation as in FIG.4 is obtained also in the case where the channel signals are cancelled based on the received signal power. The case of FIG.4 shows the operation in an example where the received signal power is CH1>CH2>CH3, and it is determined that the channel signals are cancelled in the order of CH1, CH2 and CH3.

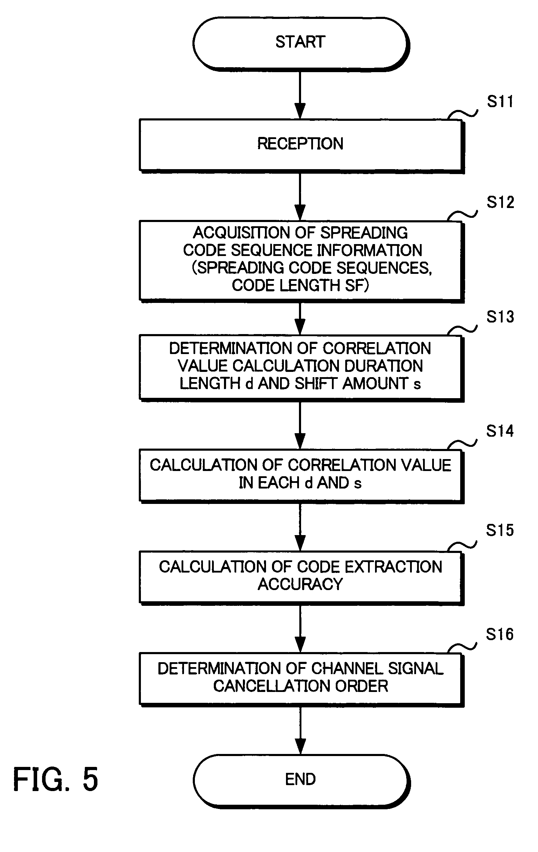

Described next is the operation for determining the signal cancellation order using characteristics of spreading code sequences respectively multiplied by channel signals. FIG.5 is a flowchart illustrating an example of the operation for determining the channel signal cancellation order of this embodiment.

A received signal received via the antenna 101 is processed in the signal shaping section 102 to each-channel signal processing section 130, and then, input to the MAC section 107 (S11). The MAC section 107 acquires the spreading code sequence information multiplied by each sub-channel signal of the received signal using a pilot symbol or preamble of the received signal (S12). The spreading code sequence information acquired by the MAC section 107 is input to the spreading code generating section 111 and correlation duration determining section 112 in the signal cancellation order determining section 110. The spreading code generating section 111 generates spreading code sequences based on the spreading code sequence information. Further, the correlation duration determining section 112 determines a correlation duration length d ($1<d<SF$) to calculate the correlation value and circulation shift amount s from the code length SF included in the spreading code sequence information (S13). The spreading code sequences generated by the spreading code generating section 111 and the correlation duration length d and circulation shift amount s determined by the correlation duration determining section 112 are input to the correlation value calculating section 113.

Next, in the determined correlation duration length d, the correlation value calculating section 113 shifts the correlation duration length d by circulation shift amount s in each of the spreading code sequence multiplied by the desired channel signal and the spreading code sequence multiplied by the non-desired channel signal, and calculates the correlation value in each circulation shift (S14). The code extraction accuracy calculating section 114 calculates the sum total of correlation values calculated in circulation shifts as a code extraction accuracy value in extracting the desired channel signal from the received signal (S15). The order determining section 115 determines the channel signal cancellation order in ascending order of the code extraction accuracy value (in descending order of maintenance of orthogonality) (S16).

The specific example of procedures for calculating the code extraction accuracy value will be described with reference to equations. Equation (1) is a spreading code sequence multiplied by a desired channel signal in the received signal, and equation (2) is spreading code sequences multiplied by non-desired channel signals. Equation (2) represents all the spreading code sequences multiplied by non-desired channels in the received signal. Equation (3) is a formula to calculate the code extraction accuracy value of the desired channel signal multiplied by the spreading code sequence (Eq.1).

[Expression 1]

$$Cd = \big(cd(0), cd(1), \cdots cd(SF-1)\big) \cdot \cdot \cdot (1)$$

$$Cu = \big(cu(0), cu(1), \cdots cu(SF-1)\big) \cdot \cdot \cdot (2)$$

$$I_{Cd,Cu,all} = \sum_{d=D}^{SF-1} \sum_{s=S}^{SF} \left| \sum_{i=s}^{d+s-1} \big(cd(i \bmod SF).* cu(i \bmod SF)\big) \right| \cdot \cdot \cdot (3)$$

SF represents a code length, d represents a correlation duration length, s represents a circulation shift amount, and ".*" represents multiplication for each structural element. In equation (3), each of D and S is an integer such that $1 < D < SF-1$ and that $0 < S < SF$, and is a value determined by the wireless communication system to which the signal cancellation order determining section 110 of this embodiment is applied and the assumed propagation path.

Further, when the code extraction accuracy value of the desired channel signal is calculated using the power as an index, equation (4) is obtained.

[Expression 2]

$$I_{Cd,Cu,all} = \sum_{d=D}^{SF-1} \sum_{s=S}^{SF} \left| \sum_{i=s}^{d+s-1} \big(cd(i \bmod SF).* cu(i \bmod SF)\big) \right|^2 \cdot \cdot \cdot (4)$$

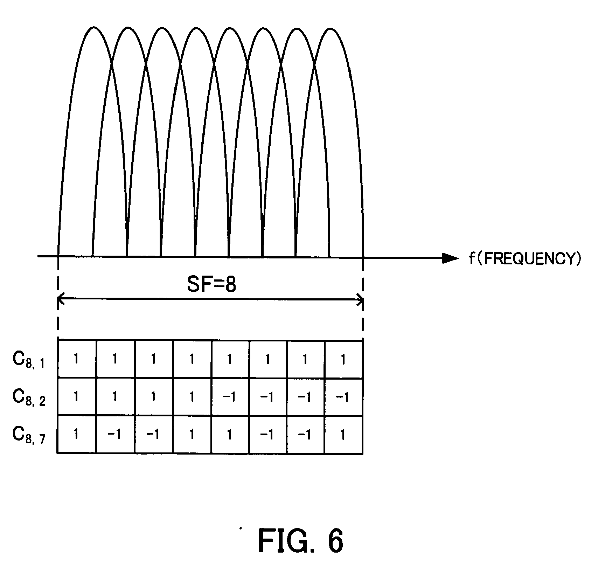

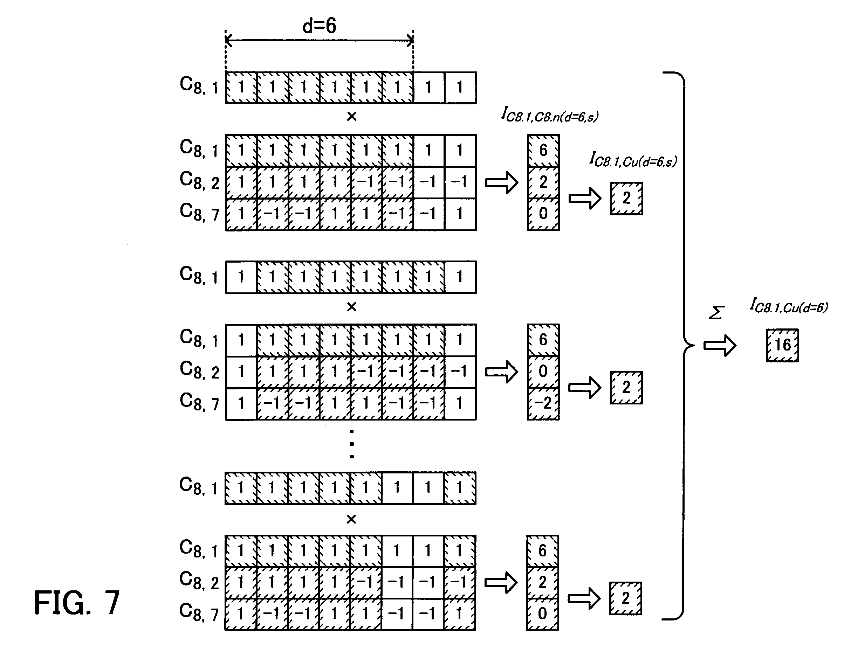

As an example, the case is explained where three spreading code sequences with the spreading length SF of "8" (SF=8) as shown in FIG. 6 are multiplied by information symbols of respective channel signals, and the code-multiplexed signal is received in the receiving apparatus. FIG.7 is a diagram showing an example of correlation value calculation, and illustrates procedures of correlation value calculation in the case where a spreading code sequence multiplied by the desired channel signal is $C_{8,1}$, and $C_{8,2}$ and $C_{8,7}$ are spreading code sequences multiplied by non-desired channel signals, the correlation duration length d is "6" (d=6) and the circulation shift amount s is "1" (s=1). The falling diagonal stroke from top left to bottom right is the duration of the correlation duration length d of the spreading code sequence multiplied by the desired channel signal, and the rising diagonal stroke from bottom left to top right is the duration of the correlation duration length d of the spreading code sequence multiplied by the non-desired channel signal.

The correlation value calculating section 113 multiplies each bit of the spreading code sequence by a respective bit of $C_{8,1}$, in the diagonal stroke duration of $C_{8,1}$, the diagonal stroke duration of $C_{8,2}$ and the diagonal stroke duration of $C_{8,7}$, and calculates the sum $I_{C8.m,C8,n(d=6,s)}$ (m=1, n=1, 2, 7, d is the correlation duration length and s is the circulation shift amount) of the multiplication results. Further, in $I_{C8.1, C8, n(d=6,s)}$, the section 113 calculates the sum $I_{C8.1, Cu(d=6,s)}$ of absolute values of $I_{C8.1, C8.2(d=6,s)}$ and $I_{C8.1, C8.7(d=6,s)}$ that are calculation results between the spreading code sequence of the desired channel signal and the spreading code sequence of the non-desired channel signal. Next, the code extraction accuracy calculating section 114 calculates the sum total $I_{C8.1, Cu(d=6)}$ of $I_{C8.1, Cu(d=6,s)}$ obtained in circulation shifts.

In addition, FIG.7 shows the case where the circulation shift amount is "1", and circulation shifts are performed by one bit starting with the beginning position p=0 up to P=SF of the correlation duration length d until one cycle is obtained, but the shift amount is capable of being modified according to the spreading code sequence, propagation path environment and the like.

Further, the correlation value calculating section 113 may calculate $I_{C8.1, Cu(d)}$ in each correlation duration length d starting with d=2 up to d=SF-1, and obtain the sum total $I_{C8.1, Cu,all}$ as a code extraction accuracy value of the channel signal multiplied by the spreading code sequence $C_{8,1}$ with D=2 in equation (3). In equation (3), the correlation duration length d is varied by one bit from d=2 to d=SF-1, but the number of variable bits is capable of being modified corresponding to the spreading code sequence, propagation path environment and the like.

FIG.7 shows an example of the case that $C_{8,1}$ is the spreading code sequence multiplied by the desired channel signal, and also in the case where $C_{8,2}$ or $C_{8,7}$ is the spreading code sequence multiplied by the desired channel signal, $I_{C8.2, Cu,all}$ or $I_{C8.7, Cu,all}$ is similarly calculated, respectively.

Finally, the order determining section 115 determines the channel signal cancellation order starting with the channel signal multiplied by the spreading code sequence with the smallest code extraction accuracy value, i.e. in ascending order of the code extraction accuracy value among the code extraction accuracy values $I_{C8.1, Cu,all}$, $I_{C8.2, Cu,all}$ and $I_{C8.7, Cu,all}$ respectively of $C_{8,1}$, $C_{8,2}$ and $C_{8,7}$ calculated by the above-mentioned method.

In the foregoing, the code extraction accuracy values are $I_{C8.1, Cu,all}$, $I_{C8.2, Cu,all}$ and $I_{C8.7, Cu,all}$, and as shown in equation (5), it is possible to use as a code extraction accuracy value a ratio to a value $S_{cd}$ calculated from the auto-correlation value of the spreading code sequence multiplied by the desired channel signal in each correlation duration length d and circulation shift amount s (in the example of FIGs.6 and 7, Cd=$C_{8,1}$, $C_{8,2}$ and $C_{8,7}$).

[Expression 3]

$$S_{Cd} = \sum_{d=D}^{SF-1} \sum_{s=S}^{SF} \left| \sum_{i=s}^{d+s-1} \left( cd(i \bmod SF) .* cd(i \bmod SF) \right) \right| \quad \cdots (5)$$

SF represents a spreading code sequence length, d represents a correlation duration length, s represents a circulation shift amount, and ".*" represents multiplication for each structural element. Each of D and S is an integer such that 1<D<SF-1 and that 0<S<SF, and is a value beforehand determined by the wireless communication system to which the signal cancellation order determining means of the first embodiment is applied and the assumed propagation path. Further, in the case of calculating using above-mentioned equation (4), the code extraction accuracy value is a ratio to value $S_{cd}$ calculated using equation (6).

[Expression 4]

$$S_{Cd} = \sum_{d=D}^{SF-1} \sum_{s=S}^{SF} \left| \sum_{i=s}^{d+s-1} \left( cd(i \bmod SF) .* cd(i \bmod SF) \right) \right|^2 \quad \cdots (6)$$

Described above is an example of the signal cancellation order determining means of this embodiment. In other words, the signal cancellation order determining means of this embodiment is characterized by calculating the correlation value of the spreading code sequence multiplied by each channel signal of the received signal while varying the calculation duration as shown in FIG.7, thereby calculating the code extraction accuracy derived from characteristics of the spreading code sequences, and determining the order. As a result, irrespective of an estimation value of the propagation path of the received signal and received signal power, by acquiring the information about the spreading code sequences multiplied by the received signal, it is possible to determine the order uniquely.

[Expression 5]

$$f\big(Cd*Cu\big)\cdots(7)$$

Cd is a spreading code sequence multiplied by a desired channel signal, and Cu is a spreading code sequence multiplied by a non-desired channel signal.

Thus, according to this embodiment, it is possible to determine the order for canceling channel signals carried on respective channels from a received signal based on the spreading code sequences. It is thereby possible to cancel a channel signal carried on the channel multiplied by the spreading code sequence maintaining the orthogonality. Accordingly, when each channel signal is separated and canceled from the received signal, channel signals are canceled in descending order of possibility of maintaining the orthogonality to other channel signals, and it is possible to obtain a signal with high accuracy. Further, irrespective of an estimation value of the propagation path of the received signal and received signal power, by acquiring the information about the spreading code sequences multiplied by the received signal, it is possible to determine the order uniquely. Accordingly, non-desired channel signals can be cancelled with accuracy even when the received signal power or SINR is the same, and it is possible to efficiently suppress performance degradation caused by deterioration of the orthogonality among spreading code sequences.

In addition, this embodiment describes the case where the correlation duration determining section 112 determines both the correlation duration length d and circulation shift amount s, but this embodiment is applicable to the case where one of the length and amount is fixed, and the other one is determined. Further, this embodiment describes the case where the correlation duration determining section 112 uses values such that $1 < d < SF$ as the correlation duration length d, but this embodiment is applicable to the case where $d = SF$ and $s = 0$ (no shift).

Moreover, this embodiment describes the case that spreading factors of spreading code sequences multiplied by respective channels are the same, but the invention is not limited to such a case, and is applicable to the case where spreading factors of spreading code sequences vary with channels.

(Second embodiment)

The second embodiment describes the signal cancellation order determining means using Hadamard Code or OVSF code as a spreading code sequence.

In MC-CDMA, OFCDM and W-CDMA (Wideband Code Division Multiple Access), Hadamard Code and OVSF code used often as a spreading code are respectively generated according to rules of equations (8) and (9). Described below is the signal order determining means when OVSF code is used as the spreading code sequence. In addition, the description is the same as in Hadamard Code. Further, in this embodiment, the same configurations as those of the receiving apparatus 100, signal cancellation order determining section 110 and signal canceling section 120 as shown in FIG.1 are used and descriptions thereof are omitted.

[Expression 6]

$$c_{2^m} = \begin{bmatrix} c_{2^{m-1}} & c_{2^{m-1}} \\ c_{2^{m-1}} & \overline{c}_{2^{m-1}} \end{bmatrix} \cdots (8)$$

$$c_{2^m} = \begin{bmatrix} c_{2^m}^{(1)} \\ c_{2^m}^{(2)} \\ c_{2^m}^{(3)} \\ c_{2^m}^{(4)} \\ \cdot \\ \cdot \\ c_{2^m}^{(2^m-1)} \\ c_{2^m}^{(2^m)} \end{bmatrix} = \begin{bmatrix} c_{2^{m-1}}^{(1)} c_{2^{m-1}}^{(1)} \\ c_{2^{m-1}}^{(1)} \overline{c}_{2^{m-1}}^{(1)} \\ c_{2^{m-1}}^{(2)} c_{2^{m-1}}^{(2)} \\ c_{2^{m-1}}^{(2)} \overline{c}_{2^{m-1}}^{(2)} \\ \cdot \\ \cdot \\ c_{2^{m-1}}^{(2^{m-1}-1)} c_{2^{m-1}}^{(2^{m-1}-1)} \\ c_{2^{m-1}}^{(2^{m-1}-1)} c_{2^{m-1}}^{(2^{m-1}-1)} \end{bmatrix} \quad \cdots (9)$$

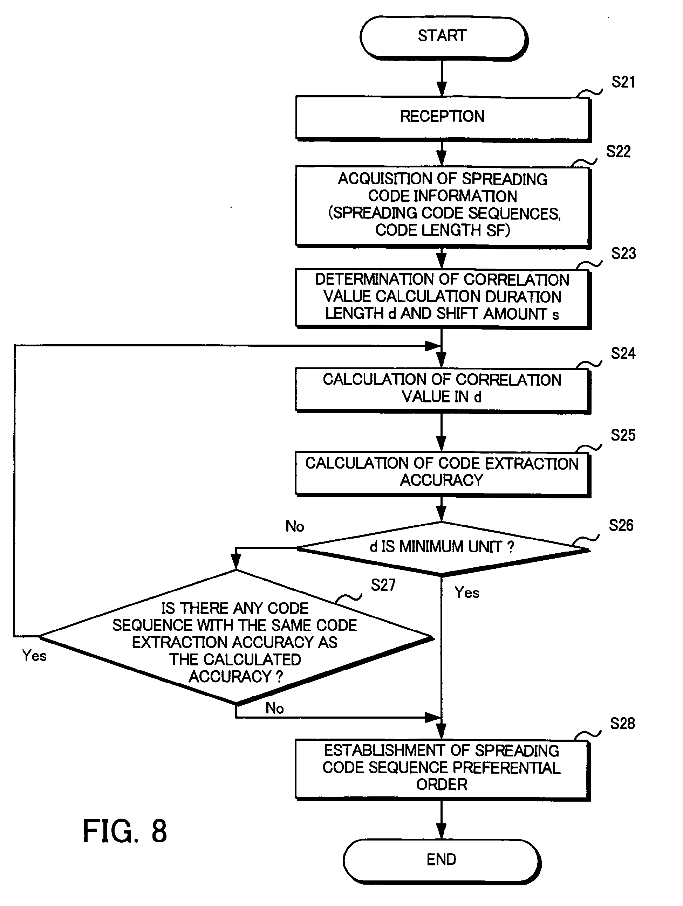

FIG. 8 is a flowchart showing an example of operation for determining a channel signal cancellation order of this embodiment.

A received signal received via the antenna 101 is processed in the signal shaping section 102 to each-channel signal processing section 130, and then, input to the MAC section 107 (S21). The MAC section 107 acquires the spreading code sequence information multiplied by each sub-channel signal of the received signal using a pilot symbol or preamble of the received signal (S22). The spreading code sequence information acquired by the MAC section 107 is input to the spreading code generating section 111 and correlation duration determining section 112 in the signal cancellation order determining section 110. The spreading code generating section 111 generates spreading code sequences based on the spreading code sequence information. Further, the correlation duration determining section 112 determines a correlation duration length d (1<d<SF) to calculate the correlation value and circulation shift amount s from the code length SF included in the spreading code sequence information (S23). The spreading code sequences generated by the spreading code generating section 111 and the correlation duration length d and circulation shift amount s determined by the correlation duration determining section 112 are input to the correlation value calculating section 113.

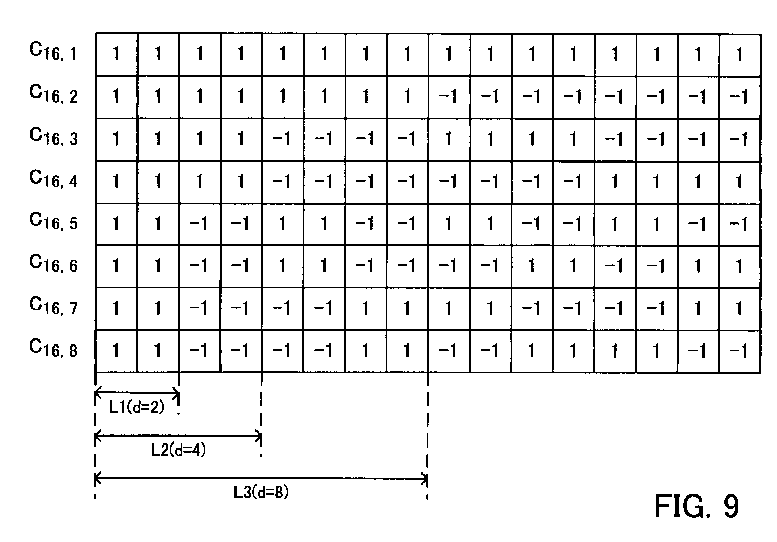

In OVSF code, the correlation duration length d is "$2^m$"(m=1,2,...$\log_2$SF-1). FIG.9 is a diagram showing an example of OVSF code sequences. As an example, as shown in FIG.9, OVSF codes with the code length SF of "16" (SF=16) are multiplied by information symbols of respective channel signals, and when the code-multiplexed signal is received in the receiving apparatus, the correlation duration lengths dare "2", "4", and "8" (which are respectively L1, L2 and L3 duration lengths in FIG.9).

Next, in the determined correlation duration length d, the correlation value calculating section 113 shifts the correlation duration length d by circulation shift amount s in each of the spreading code sequence multiplied by the desired channel signal and the spreading code sequence multiplied by the non-desired channel signal, and calculates the correlation value in each circulation shift (S24). The correlation value calculating section 113 calculates the correlation value in descending order of the correlation duration length d. The code extraction accuracy calculating section 114 calculates the sum total of correlation values calculated in circulation shifts as a code extraction accuracy value in extracting the desired channel signal from the received signal (S25). The circulation shift amount s is 0,1,... $2^m$-1.

From the foregoing, equation (3) becomes equation (10) when the spreading code sequence is the OVSF code.

[Expression 7]

$$I_{Cd,Cu,all} = \sum_{m=1}^{\log_2 SF-1} \sum_{s=S}^{2^m-1} \left| \sum_{i=s}^{2^m+s-1} \left( cd(i \bmod SF) . * cu(i \bmod SF) \right) \right| \quad \cdots (10)$$

SF represents a spreading code sequence length, S represents a circulation shift amount, and ".*" represents multiplication for each structural element. S is an integer such that $0<S<2^m-1$, and is a value determined by the wireless communication system to which the signal cancellation order determining means of the first embodiment is applied and the assumed propagation path.

The correlation value calculating section 113 calculates the correlation value in descending order of the correlation duration length d, i.e. in the order of L3, L2 and L1. In the case where the correlation duration length d that is not a minimum unit (herein, L1) exists (No in S26), the code extraction accuracy calculating section 114 returns to step S24 when the calculated code extraction accuracy values are the same among the spreading code sequences (Yes in S27), while halting the correlation value calculation when the calculated code extraction accuracy values vary with the spreading code sequences (No in S27). Thus, in calculating the code extraction accuracy value in each of L1, L2 and L3 durations, when the calculated code extraction accuracy values vary with the spreading code sequences (No in S27), the code extraction accuracy calculation is halted to determine the code cancellation order, and the calculation amount is thereby reduced.

The order determining section 115 determines the channel signal cancellation order in ascending order of the code extraction accuracy value (in descending order of maintenance of the orthogonality) (S28).

Thus, according to this embodiment, by setting the correlation duration length using $2^n$, it is possible to calculate correlation values reflecting characteristics of the spreading code sequences. Irrespective of an estimation value of the propagation path of the received signal and received signal power, by acquiring the information about the spreading code sequences multiplied by the received signal, it is possible to determine the order uniquely. By this means, non-desired channel signals can be cancelled with accuracy even when the received signal power or SINR is the same, and it is possible to efficiently suppress performance degradation caused by deterioration of the orthogonality among spreading code sequences.

In addition, this embodiment describes the case that spreading factors of spreading code sequences multiplied by respective channels are the same, but the invention is not limited to such a case, and is applicable to the case where spreading factors of spreading code sequences vary with channels.

(Third embodiment)

The third embodiment describes a method for suppressing the calculation amount in the signal cancellation order determining means.

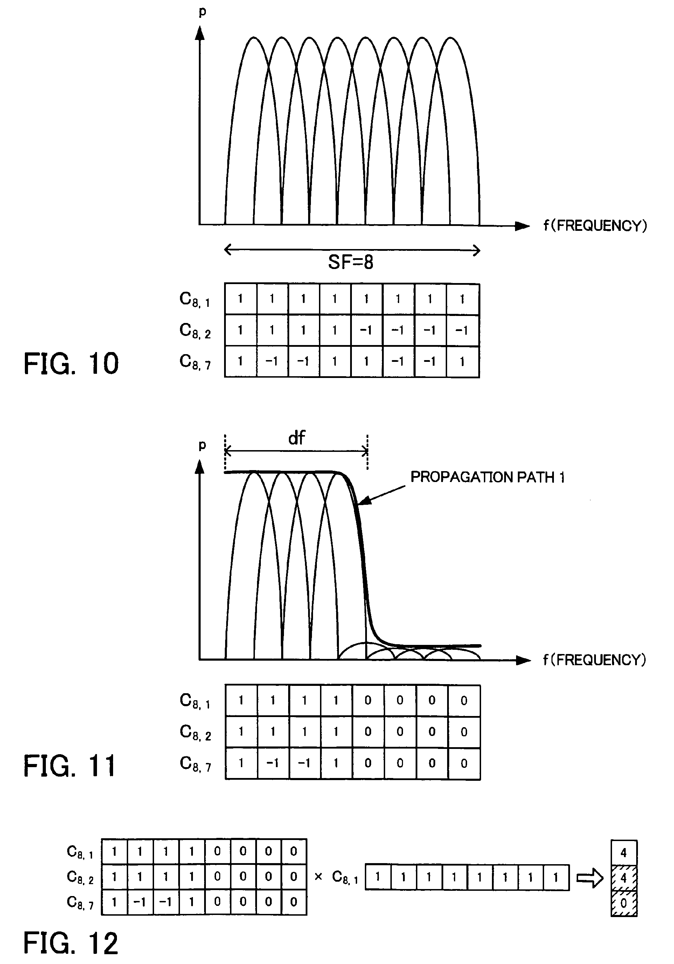

FIG.10 is a diagram showing an example of a code-multiplexed signal transmitted from the transmitting side. The transmitting side (transmitting apparatus) transmits the code-multiplexed signal obtained by multiplying three spreading code sequences, OVSF codes $C_{8,1}$, $C_{8,2}$, $C_{8,7}$ with SF of "8" (SF=8), by information symbols of respective channels.

FIG.11 is a diagram showing an example of a state of a signal obtained by the receiving side receiving the signal as shown in FIG.10. FIG.11 shows the spreading code sequences when the code-multiplexed signal as shown in FIG.10 is passed through the propagation path 1 and received on the receiving side (receiving apparatus). In the propagation path 1 of FIG. 11, FIG.11 shows spreading code sequences at the reception in the case where duration df without the power falling is "4" (df=4) and the signal energy during the duration with the power falling is zero. The duration df of FIG. 11 can be calculated from the delay spread of the propagation path.

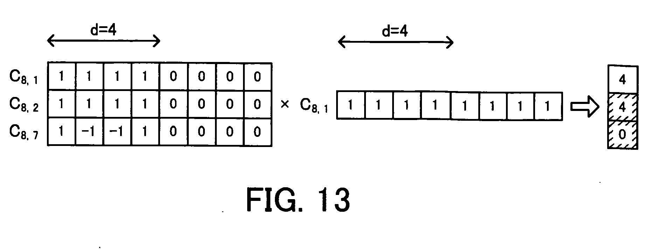

FIG.12 shows a despreading result with $C_{8,1}$ in the case of receiving the spreading code sequences of FIG. 11. In FIG.12, diagonally shaded areas show interfering components imposed on $C_{8,1}$ from $C_{8,2}$ and $C_{8,7}$. FIG.13 shows a correlation value calculation result with the correlation duration length d of "4" (d=4) and circulation shift amount s of "0" (s=0) by the signal cancellation order determining means of the first embodiment or the second embodiment in the case of receiving the spreading code sequences of FIG.11. In FIG.12, diagonally shaded areas show interfering components imposed on $C_{8,1}$ from $C_{8,2}$ and $C_{8,7}$, and the interfering component amount is the same result as in the propagation path with df of "4" (df=4) of FIG.12.

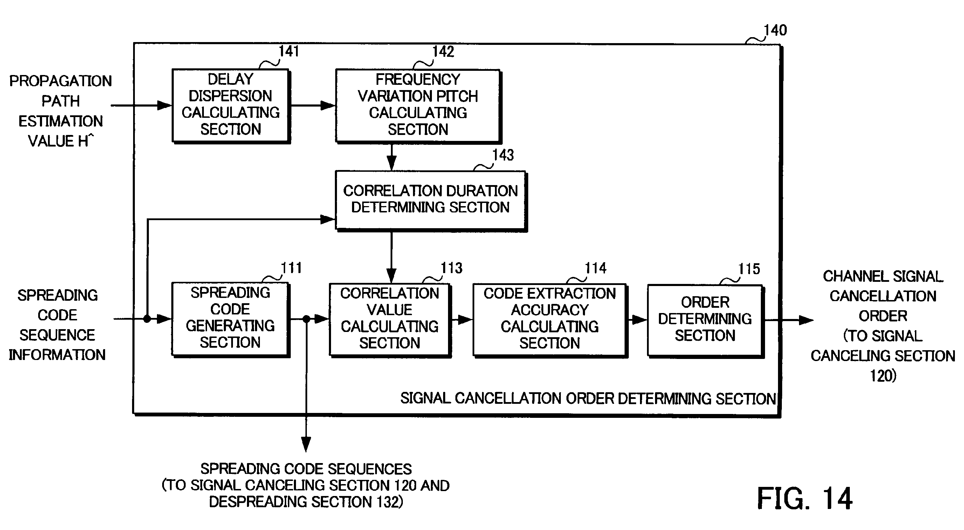

In consideration of such properties, described below is the means for suppressing the calculation amount in the signal cancellation order determining means in the first and second embodiments. FIG.14 is a block diagram showing an example of a configuration of a signal cancellation order determining section 140 of this embodiment. The signal cancellation order determining section 140 as shown in FIG.14 has the configuration such that a delay spread calculating section 141 and a frequency variation pitch calculating section 142 are added to the signal cancellation order determining section 110 as shown in FIG.2 and that the function of the correlation duration determining section 143 is modified. The other structural elements are the same as in FIG.2 and descriptions thereof are omitted. Further, the receiving apparatus uses the same configuration as in FIG.1, and has the signal cancellation order determining section 140 as shown in FIG.14 substituting for the signal cancellation order determining section 110.

The delay spread calculating section 141 receives a propagation path estimation value H^ estimated in the propagation path estimating section 105, and calculates delay spread σ from the input propagation path estimation value H^. The frequency variation pitch calculating section 142 calculates frequency variation pitch df that is the duration without the frequency variation falling based on the delay spread σ. The correlation duration determining section 143 determines a correlation duration length d based on the spreading code sequence information and the frequency variation pitch df calculated in the frequency variation pitch calculating section 142.

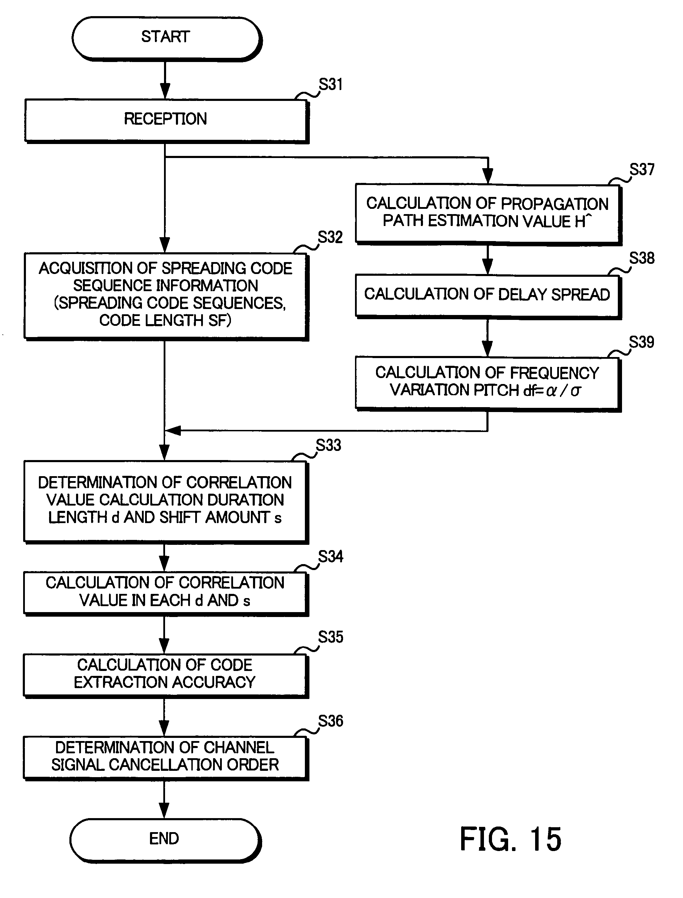

Described next is the operation of the signal cancellation order determining section 140 of this embodiment. FIG.15 is a flowchart showing an example of the operation for determining a signal cancellation order of this embodiment.

A received signal received via the antenna 101 is input to the propagation path estimating section 105 after being processed in the signal shaping section 102 to FFT section 104, while being input to the MAC section 107 after being processed in the signal shaping section 102 to each-channel signal processing section 130 (S31). The MAC section 107 acquires the spreading code sequence information multiplied by each sub-channel signal of the received signal using a pilot symbol or preamble of the received signal (S32). The spreading code sequence information acquired by the MAC section 107 is input to the spreading code generating section 111 and correlation duration determining section 143 in the signal cancellation order determining section 140. The spreading code generating section 111 generates spreading code sequences based on the spreading code sequence information.

In parallel with the step S32, the propagation path estimating section 105 estimates a propagation path estimation value H^ based on the pilot symbol included in the input received signal (S37). The delay spread calculating section 141 receives the propagation path estimation value H^ estimated in the propagation path estimating section 105, and based on the input propagation path estimation value H^, calculates delay spread σ (S38). The frequency variation pitch calculating section 142 calculates a frequency variation pitch df meeting equation (11), based on the delay spread σ calculated in the delay spread calculating section 141.

$$\mathrm{df} \leq \alpha / \sigma \ldots (11)$$

α is an arbitrary value determined fixedly from the wireless communication system, propagation environment and the like, and can take numeric values in the range that 1<df≤SF.

The correlation duration determining section 143 determines a correlation duration length d (1<d<SF) to calculate the correlation value and circulation shift amount s based on the spreading code sequence information, the code length SF included in the spreading code sequence information, and frequency variation pitch df calculated in the frequency variation pitch calculating section 142 (S33). The spreading code sequences generated by the spreading code generating section 111 and the correlation duration length d and circulation shift amount s determined by the correlation duration determining section 112 143 are input to the correlation value calculating section 113. The processing of step S34 and subsequent steps is the same as the processing of step S14 and subsequent steps in FIG.5, and descriptions thereof are omitted.

Thus, according to this embodiment, the correlation duration length d and circulation shift amount s are determined using the delay spread σ calculated based on the propagation path estimation value H^, and it is thereby possible to suppress the calculation amount in the correlation value calculating section 113. By this means, it is possible to enhance the efficiency of the processing for determining a channel signal cancellation order based on spreading code sequences.

In addition, this embodiment describes the case that spreading factors of spreading code sequences multiplied by respective channels are the same, but the invention is not limited to such a case, and is applicable to the case where spreading factors of spreading code sequences vary with channels.

(Fourth embodiment) The fourth embodiment describes simplified signal cancellation order determining means allowed in the case of using OVSF codes.

An OVSF code sequence with the code length of SF multiplied by a channel signal of a received signal is divided by a higher code unit to generate the code sequence, and the number of OVSF code sequences used in each divided block is calculated as a code extraction accuracy to be used in determining a code cancellation order.

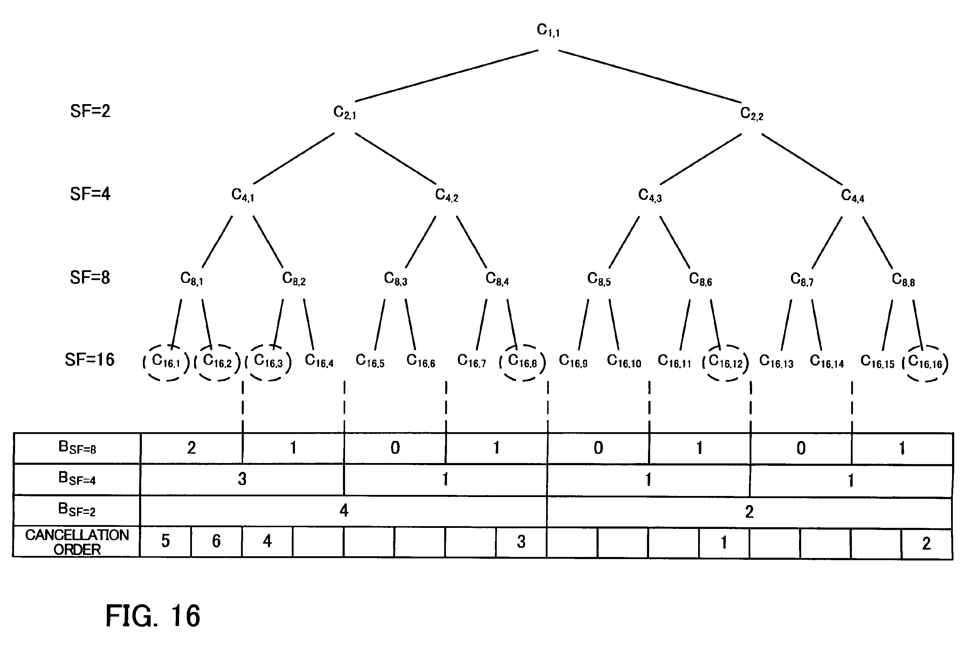

The simplified signal cancellation order determining means will be described below using as an example the case that OVSF code sequences with SF=16 as shown in FIG. 9 are multiplied. FIG.16 shows a generation code tree in SF=16. FIG.16 shows a generation code tree to generate spreading code sequences with SF=2, sequences with SF=4, sequences with SF=8, and then, sequences with SF=16.

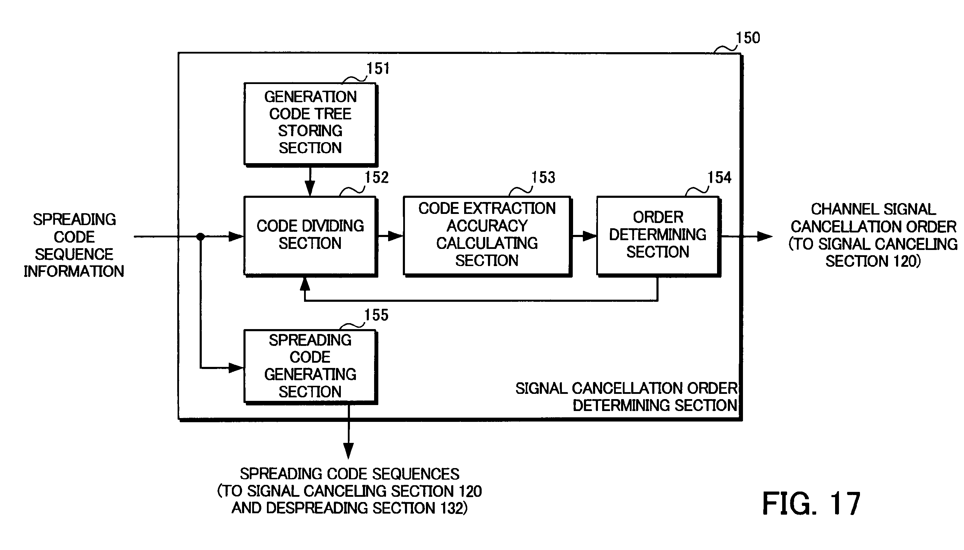

FIG.17 is a block diagram showing an example of a configuration of a signal cancellation order determining section 150 of this embodiment. The signal cancellation order determining section 150 as shown in FIG.17 has a generation code tree storing section 151, code dividing section 152, code extraction accuracy calculating section 153, order determining section 154 and spreading code generating section 155. Further, the receiving apparatus uses the same configuration as in FIG.1, and has the signal cancellation order determining section 150 as shown in FIG. 17 substituting for the signal cancellation order determining section 110.

The generation code tree storing section 151 is a storage area for storing information about the generation tree of OVSF codes to generate spreading code sequences.

The code dividing section 152 is to divide a generation code tree into a plurality of blocks using a duration of a higher code to generate spreading code sequences, and divides a code sequence into blocks by a higher code unit in the generation code tree read (called) from the code tree storing section 151 using the spreading code sequence information.

The code extraction accuracy calculating section 153 calculates the number of spreading code sequences multiplied by respective channel signals as a code extraction accuracy value among spreading code sequences included in (belonging to) a block divided by the code dividing section 152.

The order determining section 154 determines a channel cancellation order starting with a channel signal multiplied by a spreading code sequence with a higher degree of maintenance of orthogonality in descending order of the maintenance of orthogonality based on the code extraction accuracy value calculated by the code extraction accuracy calculating section 153. More specifically, the section 154 determines the preferential order in which a spreading code sequence belonging to a block with a lower number of spreading code sequences is cancelled. In the case where the preferential order is determined, or determination of the order in the minimum block unit is finished, the order determining section 154 outputs the channel cancellation order to the signal canceling section 120, while outputting the information about a plurality of divided blocks to the code dividing section 152 in the other case.

The spreading code generating section 155 generates spreading code sequences based on the spreading code sequence information to output to the signal canceling section 120 and despreading section 132.

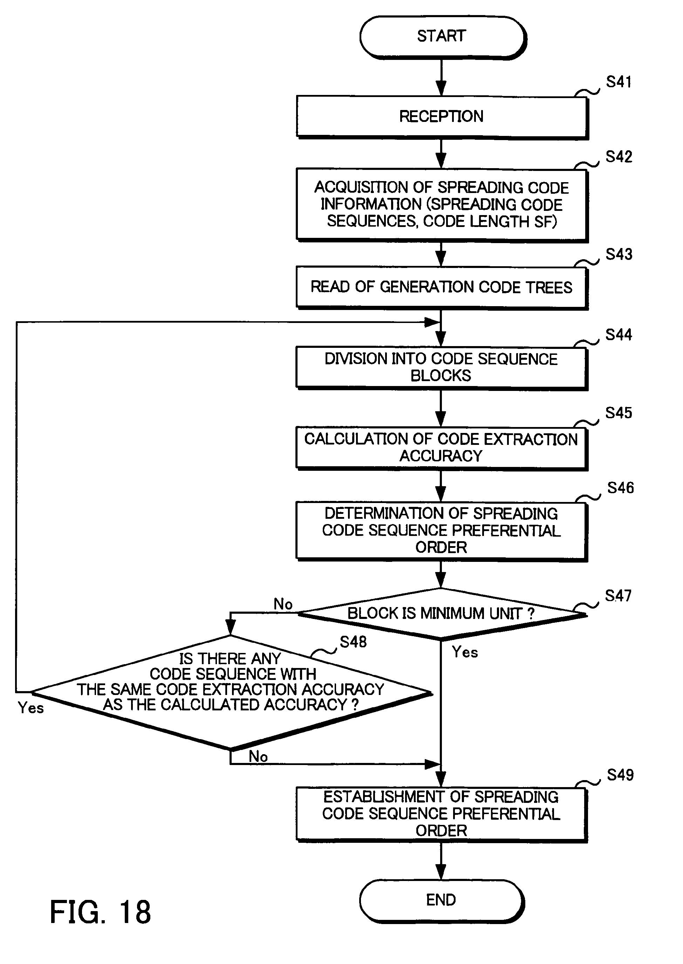

Described next is the operation of the signal cancellation order determining section 150. In this embodiment, the operation is described in the case of receiving a code-multiplexed signal subjected to spreading processing using spreading code sequences $C_{16,1}$ $C_{16,2}$, $C_{16,3}$, $C_{16,8}$, $C_{16,12}$ and $C_{16,16}$ circled in FIG.16. FIG.18 is a flowchart showing an example of the operation for determining a signal cancellation order in this embodiment.

A received signal received via the antenna 101 is processed in the signal shaping section 102 to each-channel signal processing section 130, and then, input to the MAC section 107 (S41). The MAC section 107 acquires the spreading code sequence information multiplied by each sub-channel signal of the received signal using a pilot symbol or preamble of the received signal (S42). The spreading code sequence information acquired by the MAC section 107 is input to the code dividing section 152 and spreading code generating section 155 in the signal cancellation order determining section 150. The spreading code generating section 155 generates spreading code sequences based on the spreading code sequence information.

The code dividing section 152 searches the generation code tree storing section 151 for the information about the generation code tree to read, based on the spreading code sequence information from the MAC section 107 (S43). Next, the code dividing section 152 divides the generation code tree into blocks by a unit of a higher code with SF=8 that is an original code to generate spreading code sequences with SF=16 (S44), and the code extraction accuracy calculating section 153 calculates the number of spreading code sequences multiplied by channel signals of the received signal in each block (S45). The calculated number of spreading code sequences is used as the code extraction accuracy value. The field of $B_{SF=8}$ in FIG.16 shows the number of spreading code sequences multiplied by channel signals of the received signal. In the following, in the field of $B_{SF=8}$ in FIG.16, from the leftmost block, blocks are represented as $B_{SF=8}$(1), $B_{SF=8}$(2)....

The order determining section 154 determines a spreading code sequence preferential order based on the code extraction accuracy values calculated by the code extraction accuracy calculating section 153 (S46). More specifically, in $B_{SF=8}$, since $B_{SF=8}$(1) is "2" ($B_{SF=8}$(1)=2) and has the highest number of code sequences, $C_{16,1}$ and $C_{16,2}$ belonging to $B_{SF=8}$(1) are judged to have the lowest code extraction accuracy, and given the lowest cancellation priority. In $B_{SF=8}$(2), $B_{SF=8}$(4), $B_{SF=8}$(6) and $B_{SF=8}$(8), a single code sequence belongs to each block, and therefore, is given the same priority.

The order determining section 154 determines whether a size of the block divided by the code dividing section 153 is a minimum unit (S47), and when the size is not the minimum unit (No in S47), determines whether spreading code sequences with the same calculated code extraction accuracy value exist (S48). When the spreading code sequences with the same calculated code extraction accuracy value exist (Yes in S48), the processing flow returns to step S44. When the size is the minimum unit (Yes in S47) and the spreading code sequences with the same calculated code extraction accuracy value do not exist (No in S48), the order determining section 154 establishes the spreading code sequence preferential order, and outputs the established spreading code sequence preferential order as a channel cancellation order.

Next, in the case of returning to step S44, the order determining section 154 outputs the determined spreading code sequence preferential order, the information about the number of SFs subjected to block division and the like to the code dividing section 152 (Yes in S48). The code dividing section 152 performs next block division based on the information output from the order determining section 154. More specifically, the code dividing section 152 divides the tree into blocks by a unit of a higher code with SF=4 that is an original code to generate code sequences with SF=8 (S44), and the code extraction accuracy calculating section 153 calculates the number of spreading code sequences multiplied by channel signals of the received signal in each block (S45). The field of $B_{SF=4}$ in FIG. 16 shows the number of sequences.

In $B_{SF=4}$, since $B_{SF=4}(1)$ is "3" ($B_{SF=4}(1)=3$) and has the highest number of code sequences, the order determining section 154 judges that code sequence $C_{16,3}$ which belongs to $B_{SF=4}(1)$ and is not given the priority has a second lowest code extraction accuracy after code sequences $C_{16,1}$ and $C_{16,2}$, and determines that an inverse cancellation preferential order is $C_{16,1}$, $C_{16,2}$ and $C_{16,3}$. In $B_{SF=4}(2)$, $B_{SF=4}(3)$ and $B_{SF=4}(4)$, a single code sequence belongs to each block, and therefore, is given the same priority (S46). Next, the processing of step S47 and subsequent steps is repeated.

After repeating the processing, the code dividing section 152 divides the tree into blocks by a unit of a higher code with SF=2 that is an original code to generate code sequences with SF=4 (S44), and the code extraction accuracy calculating section 153 calculates the number of spreading code sequences multiplied by channel signals of the received signal in each block (S45). The field of $B_{SF=2}$ in FIG.16 shows the number of sequences.

In $B_{SF=2}$, since $B_{SF=4}(1)$ is "4" ($B_{SF=4}(1)=4$) and has the highest number of code sequences, the order determining section 154 judges that spreading code sequence $C_{16,8}$ belonging to $B_{SF=2}(1)$ has a third lowest code extraction accuracy after spreading code sequences $C_{16,1}$, $C_{16,2}$ and $C_{16,3}$, and determines that an inverse cancellation order is $C_{16,1}$, $C_{16,2}$, $C_{16,3}$ and $C_{16,8}$ (S46). Since SF=2 is the highest unit of block (Yes in S47), the order determining section 154 establishes the spreading code sequence preferential order (S49), and outputs the established spreading code preferential order to the signal canceling section 120 as a channel cancellation order.

As described above, the tree is divided into blocks of a unit of a higher code with SF=2, the number of code sequences belonging to each block is used as code extraction accuracy, and the cancellation order is determined. From the above-mentioned results, when OVSF codes with SF=16 as shown in FIG.9 are multiplied, the code cancellation order is $C_{16,12}$, $C_{16,16}$, $C_{16,8}$, $C_{16,3}$, $C_{16,1}$, and $C_{16,2}$. In addition, as shown in the cancellation order field of FIG.16, in FIG.16, when the code extraction accuracy is the same, the order is determined in ascending code number order, but the invention is not limited thereto.

Thus, according to this embodiment, it is possible to determine a channel signal cancellation order using a generation code tree to generate spreading code sequences. It is thereby possible to reduce the calculation amount to calculate the code extraction accuracy values, and to determine a channel signal cancellation order with ease.

In addition, this embodiment describes the case that spreading factors of spreading code sequences multiplied by respective channels are the same, but the invention is not limited to such a case, and is applicable to the case where spreading factors of spreading code sequences vary with channels.

(Fifth embodiment)
The fifth embodiment describes suppressing the calculation amounts in a signal cancellation order determining section using the signal cancellation order determining means of each of the above-mentioned embodiments and in the receiving apparatus.

In the signal cancellation order determining means of the signal separating apparatus (interference canceller) of each of the above-mentioned embodiments, the order is determined using code extraction accuracy values derived from characteristics of spreading code sequences multiplied by respective channel signals of a received signal. To determine a channel signal cancellation order without depending on the propagation path environment as in the third embodiment except that delay spread $\sigma$ is used, the receiving apparatus is capable of calculating code extraction accuracy values, and beforehand storing the calculated code extraction accuracy values in a table (storage area) for determining the order.

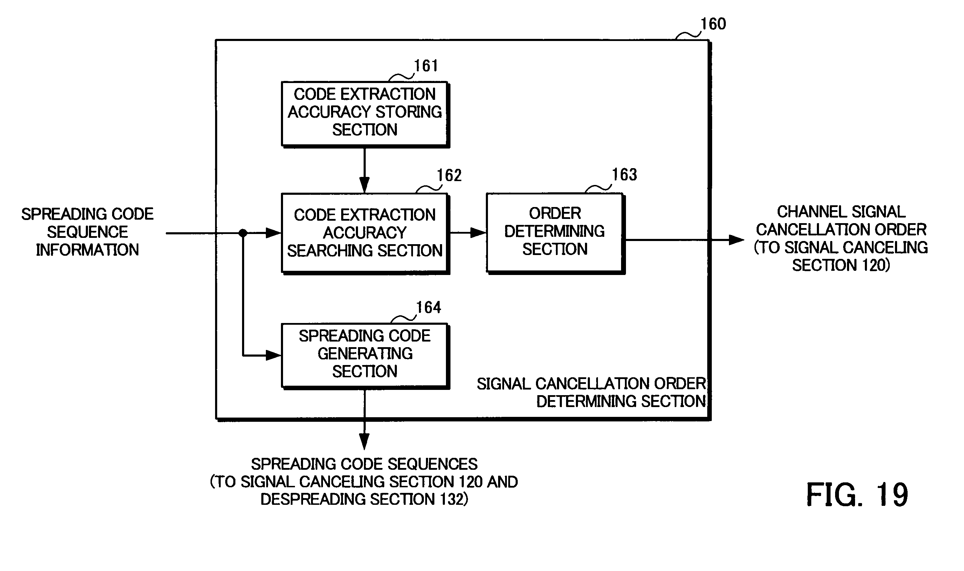

FIG.19 is a block diagram showing an example of a configuration of a signal cancellation order determining section 160 of this embodiment. The signal cancellation order determining section 160 as shown in FIG.19 has a code extraction accuracy storing section 161, code extraction accuracy searching section 162, order determining section 163, and spreading code generating section 164. Further, the receiving apparatus uses the same configuration as in FIG.1, and has the signal cancellation order determining section 160 as shown in FIG.19 substituting for the signal cancellation order determining section 110.

The code extraction accuracy storing section 161 is a storage area that stores code extraction accuracy values. The code extraction accuracy value is a value obtained by calculating a degree of maintenance of the orthogonality between a spreading code sequence multiplied by a desired channel signal and a spreading code sequence multiplied by a non-desired channel signal, and includes the code extraction accuracy value calculated by procedures described in each of the above-mentioned embodiments.

The code extraction accuracy storing section 161 holds values calculated by the following method, as code extraction accuracy values. The code extraction accuracy storing section 161 holds a value obtained by calculating a correlation value between a spreading code sequence multiplied by a desired channel signal and a spreading code sequence multiplied by a non-desired channel signal for a set correlation duration length, and calculating a code extraction accuracy value using the calculated correlation value. As the correlation duration length and/or a circulation shift amount to vary the position of the spreading code sequence in the correlation duration length, it is possible to use a value beforehand determined in the wireless communication system.

As another example, the code extraction accuracy storing section 161 holds a value obtained by dividing a generation code tree into a plurality of blocks using a duration of a higher code to generate spreading code sequences, and calculating as a code extraction accuracy value the number of spreading code sequences multiplied by respective channel signals among spreading code sequences included in the divided block. These values are of examples of the code extraction accuracy value, and values other than these values may be stored.

The code extraction accuracy searching section 162 analyzes spreading code sequences multiplied by respective channel signals of a received signal from the spreading code sequence information obtained from the received signal, searches the code extraction accuracy storing section 161, and obtains code extraction accuracy values corresponding to the analyzed spreading code sequences.

The order determining section 163 receives the code extraction accuracy values searched by the code extraction accuracy searching section 162, determines a channel signal cancellation order starting with a channel signal multiplied by a spreading code sequence with a higher degree of maintenance of orthogonality in descending order of the maintenance of orthogonality, and outputs the determined channel signal cancellation order to the signal canceling section 120.

The spreading code generating section 164 generates spreading code sequences based on the spreading code sequence information to output to the signal canceling section 120 and despreading section 132.

Thus, according to this embodiment, since the code extraction accuracy values are beforehand calculated and stored in the storage area, it is possible to suppress the calculation amount to calculate the code extraction accuracy value. It is thereby possible to reduce the time required to determine the channel signal cancellation order, and to suppress the time required for demodulation of the received signal.

In addition, this embodiment describes the case that spreading factors of spreading code sequences multiplied by respective channels are the same, but the invention is not limited to such a case, and is applicable to the case where spreading factors of spreading code sequences vary with channels.

(Sixth embodiment)

The sixth embodiment describes the case of using a kinship distance calculated from a generation code tree as a spreading code accuracy extraction value. Further, an example is described for using a kinship distance between spreading code sequences, calculating again the distance between spreading code sequences whenever determining a channel signal to cancel, and sequentially determining channels to cancel. This embodiment describes the cancellation order determining means using as an example the case where OVSF code sequences with SF=16 are multiplied by information symbols, and the number of code multiplexes is "6".

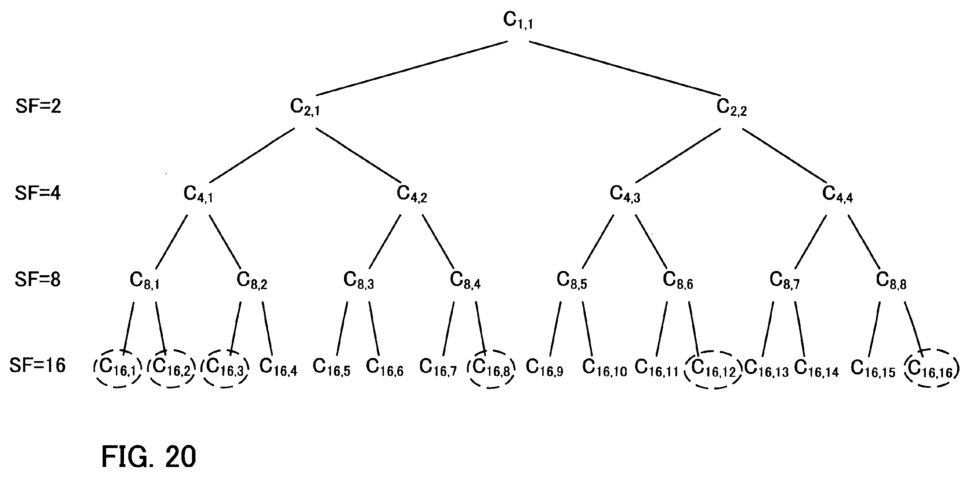

FIG.20 is a diagram showing an example of a generation code tree of OVSF code sequences with SF=16. It is described as an example in this embodiment that the receiving apparatus receives a code-multiplexed signal where channel signals are multiplied by $C_{16,1}$ $C_{16,2}$, $C_{16,3}$, $C_{16,8}$, $C_{16,12}$ and $C_{16,16}$ dashed-line circled in FIG.20.

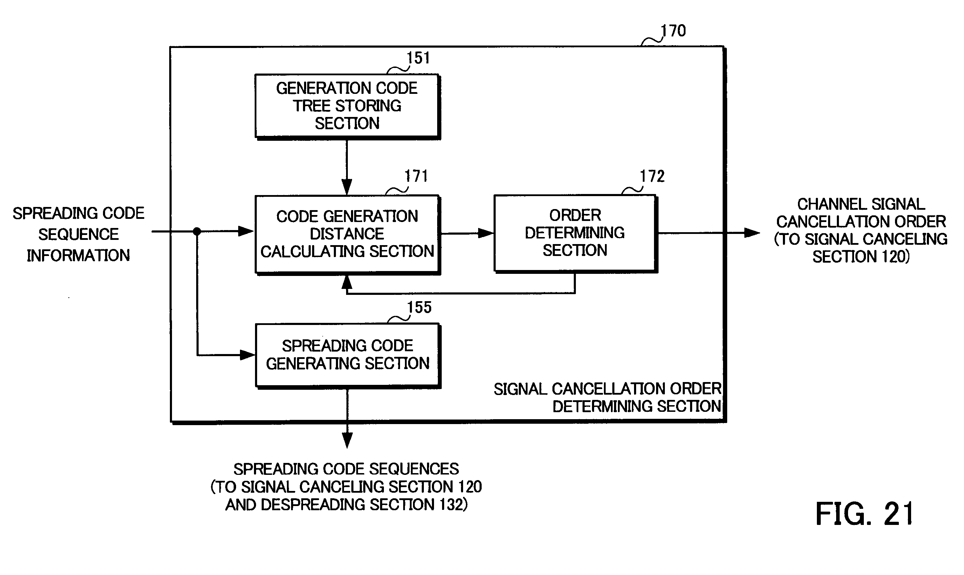

FIG.21 is a block diagram showing an example of a configuration of a signal cancellation order determining section of this embodiment. The signal cancellation order determining section 170 as shown in FIG.21 has a generation code tree storing section 151, code generation distance calculating section 171, order determining section 172 and spreading code generating section 155. The structural elements assigned the same reference numerals as in FIG.17 are the same and descriptions thereof are omitted. Further, the receiving apparatus uses the same configuration as in FIG.1, and has the signal cancellation order determining section 170 as shown in FIG.21 substituting for the signal cancellation order determining section 110.

The code generation distance calculating section 171 calculates kinship distances between spreading code sequences multiplied by respective channels, based on the spreading code sequence information and information about a generation code tree stored in the generation code tree storing section 151. Further, the section 171 is notified of (acquires) a spreading code sequence from the order determining section 172, and calculates kinship distances between spreading code sequences except the notified spreading code sequence. Based on the spreading code sequence information input from the MAC section 107, the code generation distance calculating section 171 acquires spreading code sequences multiplied by respective channels.

The kinship distance is a value obtained by calculating a distance between spreading code sequences based on the code generation tree, and is indicative of a distance from a spreading code sequence to another spreading code sequence via a common higher code (parent code). The common higher code is a common code in a higher layer that is an origin to generate the spreading code sequence and another spreading code sequence. Described herein is an example of calculating a distance between codes with different layers as "1". For example, for $C_{16,1}$ and $C_{16,2}$, the higher code (parent code, higher common code) is $C_{8,1}$, two distances of from $C_{16,1}$ to $C_{8,1}$ and from $C_{8,1}$ to $C_{16,2}$ are required, and the kinship distance is "2". For $C_{16,1}$ and $C_{16,3}$, the higher code to pass through is $C_{4,1}$, and the kinship distance is "4". Further, the kinship distance is an indicator indicative of a degree of maintenance of orthogonality between a spreading code sequence multiplied by a desired channel signal and a spreading code sequence multiplied by a non-desired channel signal, and is an example of the code extraction accuracy value described in each of the above-mentioned embodiments.

The code generation distance calculating section 171 first calculates kinship distances between spreading code sequences multiplied by respective channels, and then, calculates again kinship distances between spreading code sequences using last-calculated spreading code sequences except a spreading code sequence notified from the order determining section 172. For example, when $C_{16,12}$ is notified from the cancellation channel selecting section, the kinship distances between spreading code sequences are calculated using $C_{16,1}$, $C_{16,2}$, $C_{16,3}$, $C_{16,8}$, and $C_{16,16}$ except spreading code $C_{16,12}$.

Based on the kinship distances calculated by the code generation distance calculating section 171, the order determining section 172 first selects a spreading code sequence with a higher degree of maintenance of the orthogonality, and notifies the code generation distance calculating section 171 of the selected spreading code sequence. Next, the order determining section 172 repeats acquiring kinship distances between spreading code sequences except the notified spreading code sequence calculated again by the code generation distance calculating section 171, and sequentially selecting a spreading code sequence with a higher degree of maintenance of the orthogonality based on the acquired kinship distances between spreading code sequences. The order determining section 172 determines a channel cancellation order in the order of channel signals in which the spreading code multiplied by the channel signal is selected, and outputs the determined channel cancellation order to the signal canceling section 120. In other words, the order determining section 172 determines the preferential order of channel signals to cancel in which the spreading code sequence is selected.

More specifically, the order determining section 172 selects a spreading code having the highest sum total of calculation results of kinship distances between each spreading code sequence and each of spreading code sequences multiplied by interfering channels (non-desired channels). Alternately, it is also possible to select a spreading code sequence with a highest minimum value among the kinship distances between each spreading code sequence and each of spreading code sequences multiplied by interfering channels and with the highest number of minimum values. For example, in FIG.20, in the code generation distance calculating section 171, kinship distances between $C_{16,1}$ and each of the other five spreading codes, $C_{16,2}$, $C_{16,3}$, $C_{16,8}$, and $C_{16,16}$ are respectively "2", "4", "6", "8" and "8", the minimum value is "2", and the number of minimum values is "1". Similarly, for all the spreading code sequences, the section 171 calculates minimum values of the kinship distance to notify to the order determining section 172. The order determining section 172 notifies the code generation distance calculating section 171 of the spreading code sequence with the highest minimum value of the kinship distance and the highest number of minimum values. Herein, minimum values of the kinship distance are calculated for all the spreading code sequences and notified to the order determining section 172, but the invention is not limited thereto. It is possible to substitute calculating the sum total of kinship distances calculated between each of all the spreading code sequences and each of spreading code sequences multiplied by interfering channel signals to notify to the order determining section 172. Specific calculation will be described in an example of operation of the signal cancellation order determining section 170 described below.

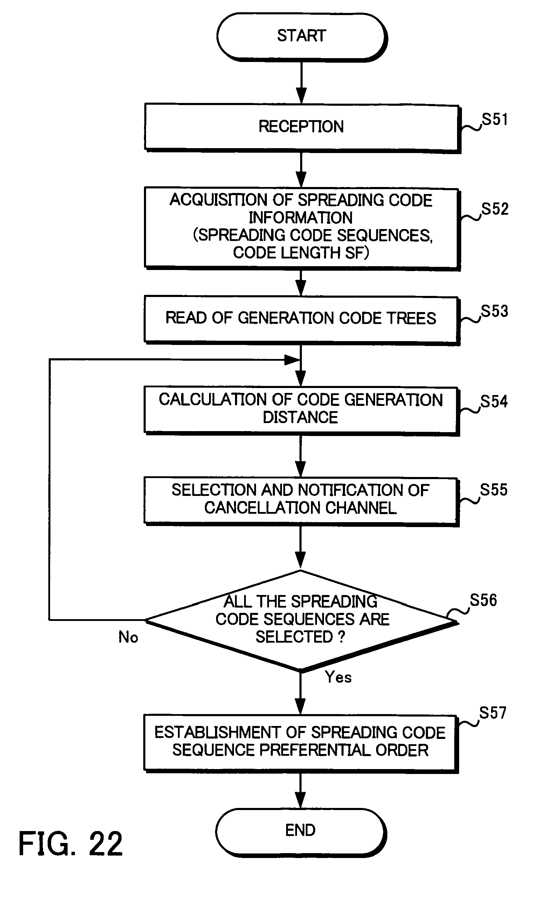

Described next is an example of operation of the signal cancellation order determining section 170. In this embodiment, the operation is described in the case of receiving a code-multiplexed signal subjected to spreading processing using spreading code sequences $C_{16,1}$ $C_{16,2}$, $C_{16,3}$, $C_{16,8}$, $C_{16,12}$ and $C_{16,16}$ circled in FIG.20. FIG.22 is a flowchart showing an example of the operation for determining a signal cancellation order in this embodiment.

A received signal received via the antenna 101 is processed in the signal shaping section 102 to each-channel signal processing section 130, and then, input to the MAC section 107 (S51). The MAC section 107 acquires the spreading code sequence information multiplied by each sub-channel signal of the received signal using a pilot symbol or preamble of the received signal (S52). The spreading code sequence information acquired by the MAC section 107 is input to the code generation distance calculating section 171 and spreading code generating section 155 in the signal cancellation order determining section 170. The spreading code generating section 155 generates spreading code sequences based on the spreading code sequence information.

The code generation distance calculating section 171 searches the generation code tree storing section 151 for the information about the generation code tree to read, based on the spreading code sequence information from the MAC section 107 (S53).

Next, for spreading code sequences $C_{16,1}$, $C_{16,2}$, $C_{16,3}$, $C_{16,8}$, $C_{16,12}$ and $C_{16,16}$ multiplied by the received signal, the code generation distance calculating section 171 calculates a kinship distance between each spreading code sequence and a spreading code sequence multiplied by an interfering channel signal, and further calculates the sum total of the distances (S54). For example, in FIG.20, spreading codes multiplied by interfering channels to spreading code $C_{16,1}$ are five spreading codes, $C_{16,2}$, $C_{16,3}$, $C_{16,8}$, $C_{16,12}$ and $C_{16,16}$, and the code generation distance calculating section 171 calculates a kinship distance between $C_{16,1}$ and each of the other five spreading code sequences, $C_{16,2}$, $C_{16,3}$, $C_{16,8}$, $C_{16,12}$ and $C_{16,16}$, and further calculates the sum total of the distances. More specifically, the kinship distances between $C_{16,1}$ and each of the other five spreading code sequences, $C_{16,2}$, $C_{16,3}$, $C_{16,8}$, $C_{16,12}$ and $C_{16,16}$, are respectively "2", "4", "6", "8" and "8", and the sum total is "28". Similarly, the code generation distance calculating section 171 calculates kinship distances and the sum totals of the distances for all the spreading code sequences, and notifies the order determining section 172 of the calculated kinship distances and sum totals.

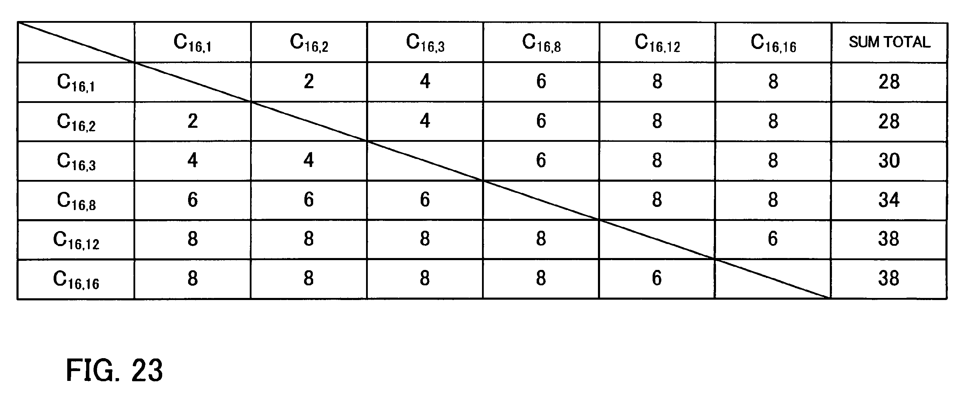

Next, the order determining section 172 selects a spreading code sequence with the highest sum total of kinship distances among results calculated by the code generation distance calculating section 171 for each spreading code sequence as a cancellation channel to notify to the code generation distance calculating section 171 (S55). FIG.23 shows calculation results of kinship distances of $C_{16,1}$, $C_{16,2}$, $C_{16,3}$, $C_{16,8}$, $C_{16,12}$ and $C_{16,16}$ and the sum totals of distances. As can be seen from FIG.23, the order determining section 172 notifies the code generation distance calculating section 171 of $C_{16,12}$ with the highest sum total. In addition, when the sum totals are the same, it is possible to select either one, and this embodiment is predicated on that a spreading code sequence with a lower spreading code sequence number is preferentially selected.

After notifying the code generation distance calculating section 171 of the spreading code with the highest sum total, the order determining section 172 determines whether all the spreading code sequences are selected (S56). When all the spreading code sequences are selected (Yes in S56), the order determining section 172 establishes a spreading code sequence preferential order in the order in which the spreading code sequence is selected, and outputs the established spreading code sequence preferential order as a channel signal cancellation order (S57). When all the spreading code sequences are not selected in step S56 (No in S56), the processing flow returns to step S54, and the code generation distance calculating section 171 calculates again kinship distances between spreading code sequences except the spreading code sequence notified from the order determining section 172 (S54).

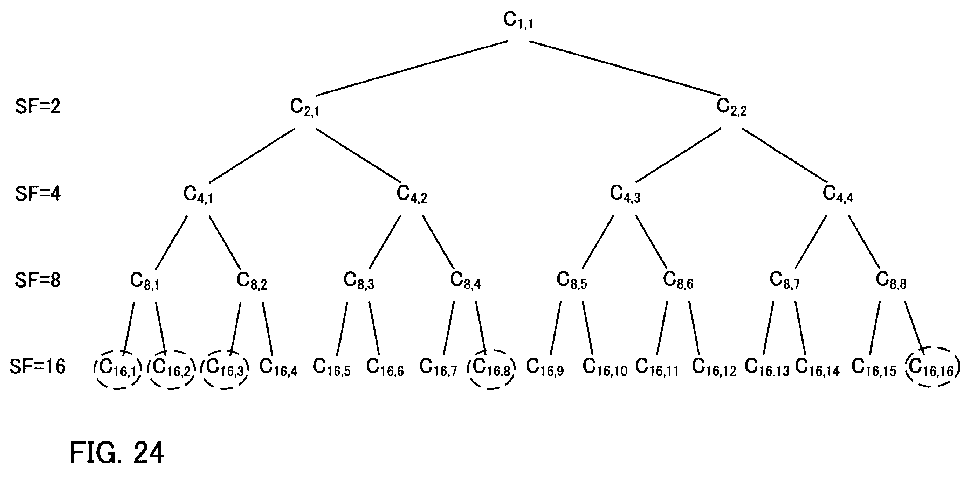

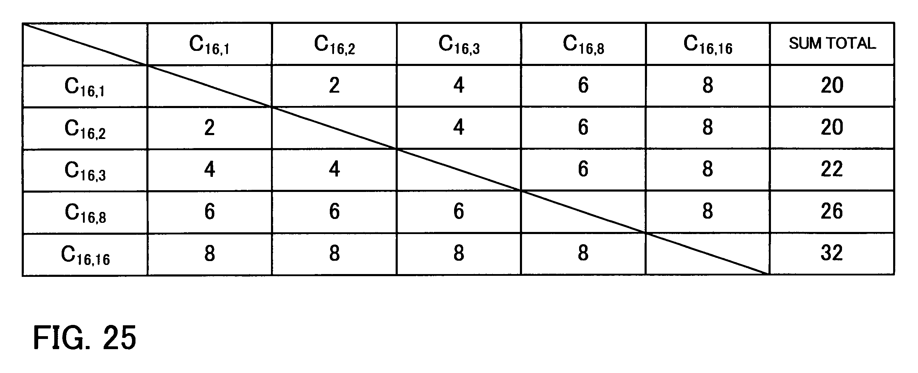

In FIG.23, when the order determining section 172 notifies the code generation distance calculating section 171 of $C_{16,12}$ with the highest sum total of calculated kinship distances, the code generation distance calculating section 171 calculates kinship distances between spreading code sequences based on $C_{16,1}$ $C_{16,2}$, $C_{16,3}$, $C_{16,8}$, and $C_{16,16}$ except $C_{16,12}$. FIG.24 is a diagram showing an example of spreading code sequences targeted for calculation of kinship distances between spreading code sequences in the code generation distance calculating section 171 after the order determining section 172 selects a single spreading code sequence. In other words, the section 171 calculates kinship distances between spreading code sequences dashed-line circled in FIG.24. FIG.25 is a diagram showing kinship distances and sum totals in the generation code tree as shown in FIG.24. From the calculation results as shown in FIG. 25, the order determining section 172 selects $C_{16,16}$ with the highest sum total of kinship distances, and notifies the code generation distance calculating section 171 of the selection result (S55). Thus, until all the spreading code sequences are selected (Yes in S56), the order determining section 172 repeats the processing of steps S54 and S55 to determine the order of spreading code sequences.

By repeating the aforementioned processing until all the spreading code sequences are selected, it is possible to determine a channel signal cancellation order in descending order of the kinship distance from a spreading code multiplied by an interfering channel, for each spreading code sequence. In other words, it is possible to determine a signal cancellation order in descending order of easiness of maintenance of orthogonality of the spreading code sequence.

Thus, by calculating kinship distances between spreading code sequences based on the code generation tree, it is possible to determine the order of spreading code sequences in descending order of easiness of maintenance of the orthogonality. Further, as compared with the case of determining the order using the correlation value, it is possible to reduce the calculation amount and processing delay, and the calculation can be made readily. Further, by calculating again the kinship distance whenever selecting a spreading code to cancel, it is possible to acquire the kinship distance in a state where the channel signal multiplied by the selected spreading code sequence is canceled, and to enhance accuracy for selecting spreading code sequences easier to maintain the orthogonality.

In addition, in the above-mentioned embodiment, the order determining section 172 determines a channel cancellation order, and then, outputs the determined channel cancellation order to the signal canceling section 120, but the invention is not limited thereto. The section 172 may output the sequentially selected spreading code whenever selecting the code to the signal canceling section 120 to notify a channel cancellation order.

Further, the above-mentioned embodiment describes the example where the order determining section 172 performs the processing for selecting a channel to cancel sequentially, while notifying the selected channel to the code generation distance calculating section 171, and determining the channel cancellation order. However, the invention allows a configuration that another structural element (for example, the cancellation channel determining section) performs part of the processing of sequentially selecting a channel to cancel, and notifying the code generation distance calculating section 171 of the selected channel. In this case, the cancellation channel determining section first selects a spreading code sequence with a higher degree of maintenance of the orthogonality based on the kinship distances calculated by the code generation distance calculating section 171, and notifies the selected spreading code sequence to the code generation distance calculating section 171 and also to the order determining section 172. Next, the cancellation channel determining section repeats acquiring kinship distances between spreading code sequences except the notified spreading code sequence calculated by the code generation distance calculating section 171, sequentially selecting a spreading code sequence with a higher degree of maintenance of the orthogonality based on the acquired kinship distances between spreading code sequences, and notifying the selected spreading code sequence to the code generation distance calculating section 171 and the order determining section 172. The order determining section 172 determines the channel cancellation order staring with a channel signal multiplied by the spreading code sequence sequentially notified.

Furthermore, in the above-mentioned embodiment, when a channel signal to cancel next is determined after selecting at least one channel signal to cancel based on the kinship distances between spreading codes, the channel signal to cancel is determined again based on the kinship distances between spreading code sequences except the determined channel signal. However, it is also possible to determine the cancellation order of all the channel signals based on the kinship distances between spreading code sequences including all the spreading code sequences multiplied by the received signal. In this case, the code generation distance calculating section 171 is required to calculate once the kinship distances between spreading code sequences multiplied by channels based on the spreading code sequence information and the information about the generation code tree stored in the generation code tree storing section 151, and the order determining section 172 is required to determine the channel cancellation order starting with a channel signal multiplied by the spreading code sequence based on the kinship distances calculated by the code generation distance calculating section 171. Further, in FIG.21, the need of the portion (arrow in the figure) is eliminated where the order determining section 172 notifies the code generation distance calculating section 171 of the spreading code sequence.

Moreover, as described in the above-mentioned embodiment, when the channel signal to cancel next is determined after selecting at least one channel signal to cancel based on the kinship distances between spreading codes, the processing of determining a channel signal to cancel again based on the kinship distances between spreading code sequences except the determined channel signal is capable of being performed in the signal cancellation order determining section 170 as described in the first embodiment with reference to FIG.2. For example, the order determining section 115 selects a spreading code sequence with a higher degree of maintenance of the orthogonality based on the calculated code extraction accuracy value, and notifies the selected spreading code sequence to the code extraction accuracy calculating section. The code extraction accuracy calculating section 114 acquires the selected spreading code sequence from the order determining section 115, calculates code extraction accuracy values among spreading code sequences except the acquired spreading code sequence, and outputs the calculated code extraction accuracy value kinship distances between spreading code sequences to the order determining section 115. Next, the order determining section 115 repeats acquiring, from the code extraction accuracy calculating section 114, code extraction accuracy values among spreading code sequences that are calculated again without using the spreading code sequence notified to the code extraction accuracy calculating section 114, and sequentially selecting a spreading code sequence with a higher degree of maintenance of the orthogonality based on the acquired code extraction accuracy values among spreading code sequences. The order determining section 115 thus determines a channel cancellation order starting with a channel signal multiplied by the selected spreading code in the order in which the spreading code sequence is selected. By this means, as in the case of using the kinship distance as described in this embodiment, it is possible to enhance accuracy in selecting spreading code sequences easier to maintain the orthogonality. In this case, in FIG.2, an arrow is added to notify the spreading code sequence from the order determining section 115 to the code extraction accuracy calculating section 114.

In addition, this embodiment describes the case that spreading factors of spreading code sequences multiplied by respective channels are the same, but the invention is not limited to such a case, and is applicable to the case where spreading factors of spreading code sequences vary with channels.

(Seventh embodiment)

The seventh embodiment describes suppressing the calculation amounts in a signal cancellation order determining section using the signal cancellation order determining means of each of the above-mentioned embodiments and in the receiving apparatus.

In the signal cancellation order determining means of the signal separating apparatus (interference canceller) of each of the above-mentioned embodiments, the order is determined using characteristics of spreading code sequences multiplied by respective channel signals of a received signal. However, it is possible to determine a channel signal cancellation order without depending on the propagation path environment as in the third embodiment except that delay spread σ is used. Accordingly, the receiving apparatus is capable of calculating code extraction accuracy values, and storing a table (storage area) of the order determined based on the calculated code extraction accuracy values.

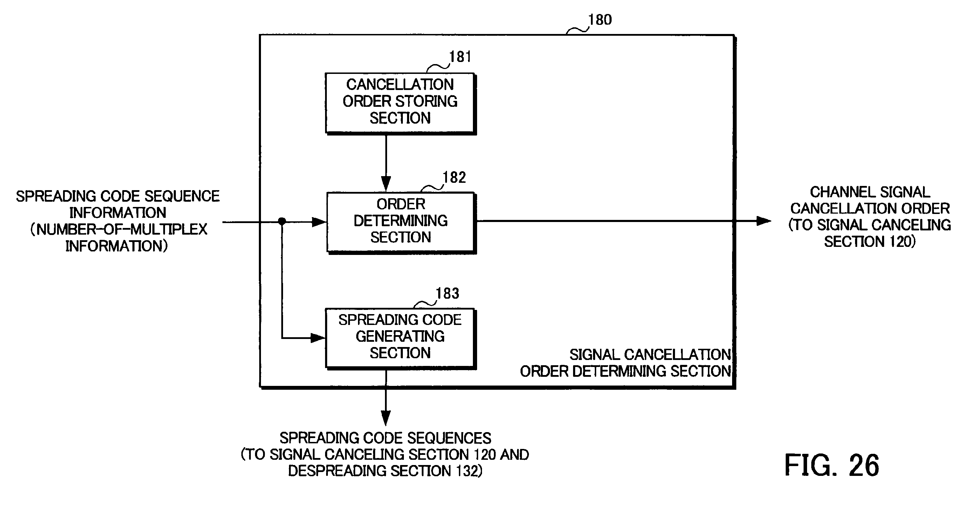

FIG.26 is a block diagram showing an example of a configuration of a signal cancellation order determining section 180 of this embodiment. The signal cancellation order determining section 180 as shown in FIG. 26 has a cancellation order storing section 181, order determining section 182, and spreading code generating section 183. Further, the receiving apparatus uses the same configuration as in FIG.1, and has the signal cancellation order determining section 180 as shown in FIG.26 substituting for the signal cancellation order determining section 110.

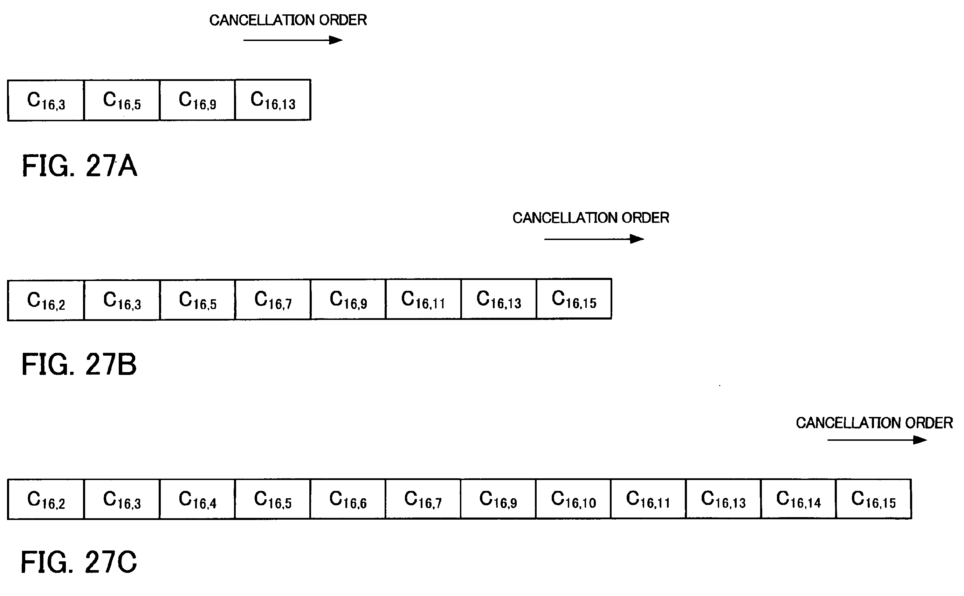

The cancellation order storing section 181 is a storage area to store a signal cancellation order of spreading code sequences. The signal cancellation order is information in which a channel cancellation order is determined starting with a channel signal multiplied by a spreading code sequence with a higher degree of maintenance of the orthogonality in descending order of the maintenance of the orthogonality based on the code extraction accuracy values (including the kinship distances). The code extraction accuracy values include the value as described in each of the above-mentioned embodiments and the kinship distance as described in the sixth embodiment. FIG.27A-27C show examples of the signal cancellation order table (also referred to as a spreading code sequence cancellation order table, signal cancellation order or signal cancellation order information) stored in the cancellation order storing section 181. FIG. 27A-27C show examples of the case where a signal received in the receiving apparatus of this embodiment is multiplied by spreading codes with a spreading factor of 16, the number of multiplexes is "4", "8" or "12", and spreading code sequences selected in each multiplexing are fixed. FIG.27A shows a cancellation order and spreading code sequences multiplied when the number of multiplexes is "4", FIG.27B shows a cancellation order and spreading code sequences multiplied when the number of multiplexes is "8", FIG.27C shows a cancellation order and spreading code sequences multiplied when the number of multiplexes is "12", and the signal is cancelled sequentially starting with the leftmost signal.

The signal cancellation orders in FIG.27A-27C are of example for determining the cancellation order using the means as descried in the sixth embodiment. More specifically, the example is described using the kinship distances used in determining the signal cancellation order. In FIG.27A-27C, descriptions are made using the case where the number of multiplexes is beforehand specified (in the communication system) between the transmitting apparatus and receiving apparatus, and spreading code sequences to use are determined. FIG. 28A-28C are diagrams showing the case where the signal cancellation order is determined using the means as described in the sixth embodiment. FIG.28A shows kinship distances of spreading code sequences $C_{16,3}$, $C_{16,5}$, $C_{16,9}$ and $C_{16,13}$ first multiplied when the number of multiplexes is "4", and the sum totals. In FIG.28A, any code can be selected because the sum totals are the same, and as an example, $C_{16,3}$ with the lowest spreading code number is selected.

FIG.28B shows kinship distances of spreading code sequences $C_{16,5}$, $C_{16,9}$ and $C_{16,13}$ except $C_{16,3}$, and the sum totals. In FIG.28B, $C_{16,5}$ with the highest sum total is selected. FIG.28C shows kinship distances of spreading code sequences $C_{16,9}$ and $C_{16,13}$ except $C_{16,3}$ and $C_{16,5}$, and the sum totals. In FIG.28C, any code can be selected because the sum totals are the same, and as an example, $C_{16,9}$ with the lowest spreading code number is selected.

Thus, the signal cancellation order is determined in the order of $C_{16,3}$, $C_{16,5}$, $C_{16,9}$ and $C_{16,13}$ using the technique of the sixth embodiment, and the determined signal cancellation order table of FIG.27A is stored in the cancellation order storing section 181.

Also when the number of multiplexes is "8" and "12", the signal cancellation order tables of FIG.27B and FIG. 27C determined by the same technique are stored in the cancellation order storing section 181, respectively. In addition, the signal cancellation order tables as shown in FIG.27A-27C are examples, and the invention is not limited thereto and allows a signal cancellation order table determined using the code extraction accuracy value to be stored.

The order determining section 182 acquires the signal cancellation order corresponding to the number of multiplexes from the cancellation order storing section 181 using the number-of-multiplex information acquired from the received signal, and outputs the acquired channel signal cancellation order to the signal canceling section 120. The number-of-multiplex information is information for specifying the number (the number of multiplexes) of code-multiplexed channel signals, and is included in the spreading code sequence information notified from the MAC section 107. Further, the spreading code sequence information includes the spreading factor information for specifying the spreading code length, cell information indicative of the cell where the receiving apparatus of the invention exists, and the like.

The spreading code generating section 183 generates spreading code sequences based on the spreading code sequence information to output to the signal canceling section 120 and despreading section 132.

Thus, according to this embodiment, since a signal cancellation order is beforehand calculated using characteristics of spreading code sequences multiplied by a received signal and stored in the storage area, it is possible to suppress the amount of calculation such as calculation of code extraction accuracy values and the like required to determine a signal cancellation order. It is thereby possible to reduce the time required to determine the channel signal cancellation order, and to suppress the time required for demodulation of the received signal.

In addition, this embodiment describes the case as an example where the spreading code sequence information to use is determined uniquely when the number of multiplexes is specified. In a communication system where the spreading code sequence information to use is not determined uniquely even when the number of multiplexes is specified, a plurality of spreading code sequence information includes the number-of-multiplex information and the information for specifying spreading code sequences to use. Further, the cancellation order storing section 181 stores signal cancellation order tables corresponding to the number of combinations of spreading code sequences. The order determining section 182 selects a signal cancellation order table conforming to the number of multiplexes and kinds of spreading code sequences to use from the cancellation order storing section 181 based on the number-of-multiplex information and the spreading code sequence information to use included in the spreading code sequence information.

Further, the above-mentioned embodiment describes the case where the cancellation order storing section 181 stores a signal cancellation table generated based on the kinship distances between spreading code sequences of a spreading code sequence multiplied by a desired channel signal and a spreading code sequence multiplied by a non-desired channel signal. However, the section 181 may store a signal cancellation order (signal cancellation order table) determined from another code extraction accuracy value such as a correlation value and the like. In other words, the cancellation order storing section 181 may store a signal cancellation order obtained by calculating a correlation value between a spreading code sequence multiplied by a desired channel signal and a spreading code sequence multiplied by a non-desired channel signal for a beforehand set correlation duration length, and determining the signal cancellation order based on a code extraction accuracy value indicative of a degree of maintenance of orthogonality between the spreading code sequence multiplied by the desired channel signal and the spreading code sequence multiplied by the non-desired channel signal using the calculated correlation value. Alternately, the cancellation order storing section 181 may store a signal cancellation order obtained by dividing a generation code tree into a plurality of blocks using a duration of a higher code to generate spreading code sequences, and determining the signal cancellation order from the code extraction accuracy value indicative of a degree of maintenance of orthogonality between the spreading code sequence multiplied by the desired channel signal and the spreading code sequence multiplied by the non-desired channel signal using the number of spreading code sequences multiplied by respective channel signals among spreading code sequences included in divided blocks.

In addition, this embodiment describes the case that spreading factors of spreading code sequences multiplied by respective channels are the same, but the invention is not limited to such a case, and is applicable to the case where spreading factors of spreading code sequences vary with channels.

(Eighth embodiment) In the eighth embodiment, the spreading code sequence information or other information required to determine a signal cancellation order is obtained from a control channel received in a receiving apparatus including the signal separating apparatus of each of the first to seventh embodiments.

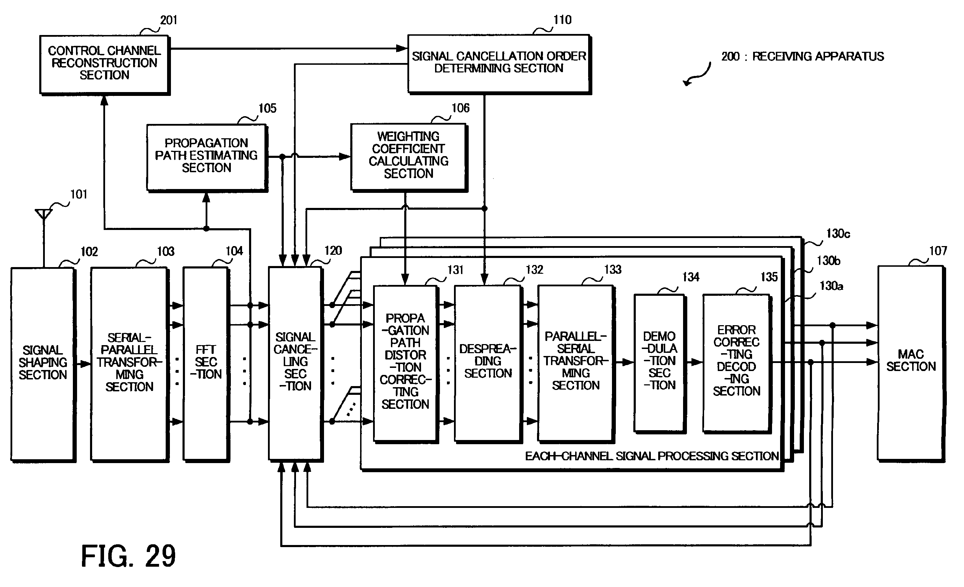

FIG.29 is a block diagram showing an example of a configuration of a receiving apparatus of the eighth embodiment. FIG.29 shows the configuration with a control channel reconstruction section 201 added to the receiving apparatus 100 of FIG.1. Further, in FIG.1, the MAC section 107 acquires the spreading code sequence information to notify the signal cancellation order determining section 110, but this function is eliminated. The other structural elements are the same as in FIG.1, and the receiving apparatus 200 as shown in FIG.29 is capable of applying the signal cancellation order determining section as described in each of the above-mentioned embodiments substituting for the signal cancellation order determining section 110.

The control channel reconstruction section 201 receives a signal belonging to the control channel among FFT output signals, performs the processing such as demodulation, decoding and the like on the input signal, acquires the spreading code sequence information or other information required to determine a signal cancellation order, and inputs the acquired spreading code sequence information or other information required to determine a signal cancellation order to the signal cancellation order determining section 110. The signal cancellation order determining section 110 acquires the spreading code sequence information from the control channel reconstruction section 201, instead of the MAC section 107.

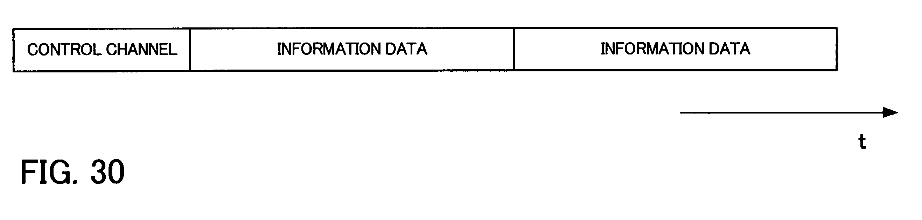

FIG.30 shows an example of a reception signal format of this embodiment. In FIG.30, the information data is multiplied by spreading codes, thus a code-multiplexed signal, and a signal targeted for cancellation as an interfering signal in the signal canceling section. The control channel reconstruction section 201 reconstructs the control channel signal before the processing is performed on the information data, and acquires the spreading code sequence information required to cancel the interfering signal in the information data. By this means, as compared with the case of acquiring the spreading code sequence information in the MAC section 107, it is possible to acquire the spreading code sequence information at an early stage, and to reduce a processing delay. Further, when the control channel signal includes the spreading code sequence information, as compared with the case where the spreading code sequence information is included in each information data, since it is possible to use the spreading code sequence information once acquired from the control channel signal, the processing load can be suppressed.

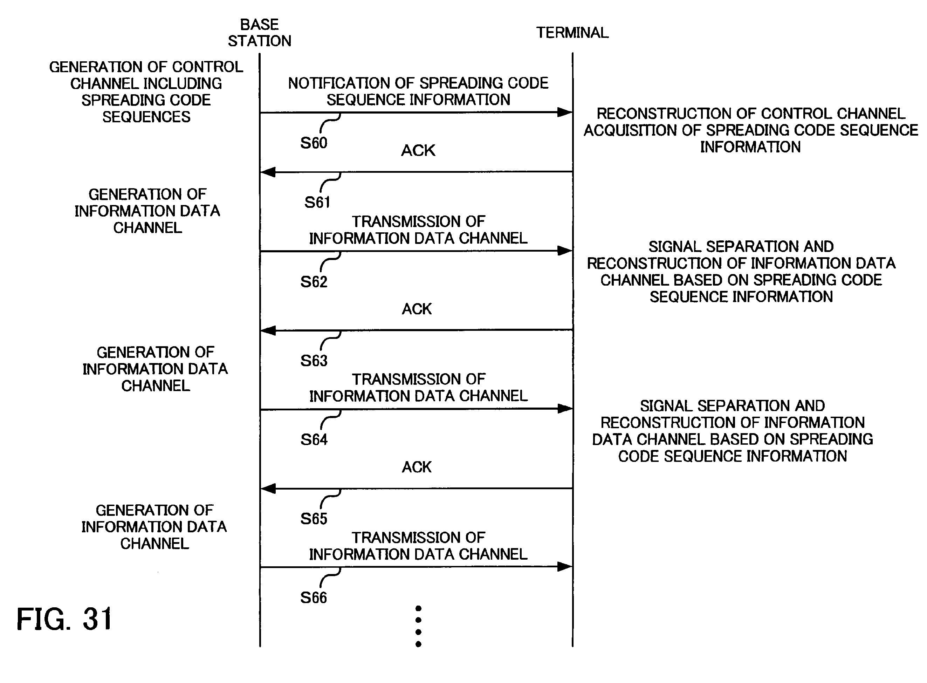

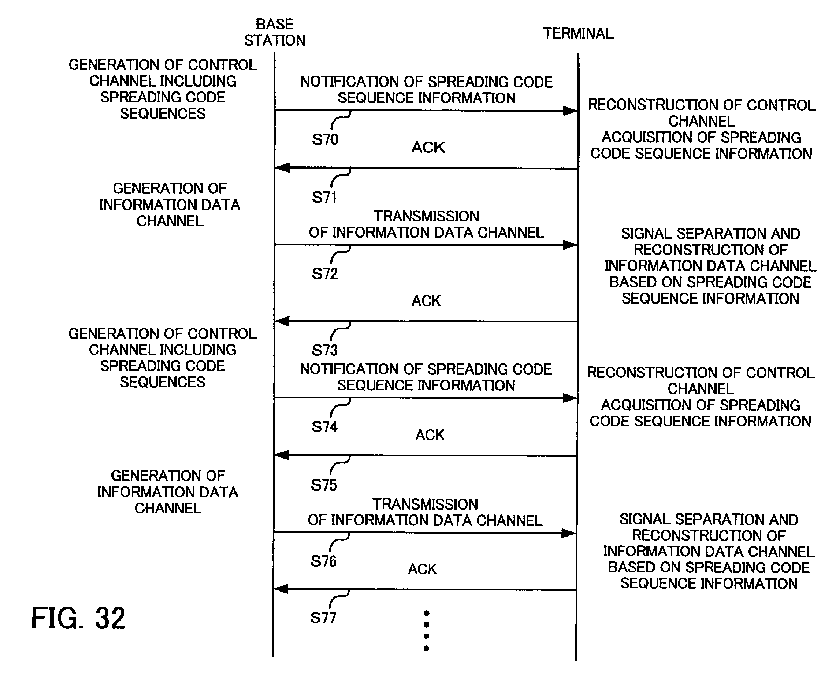

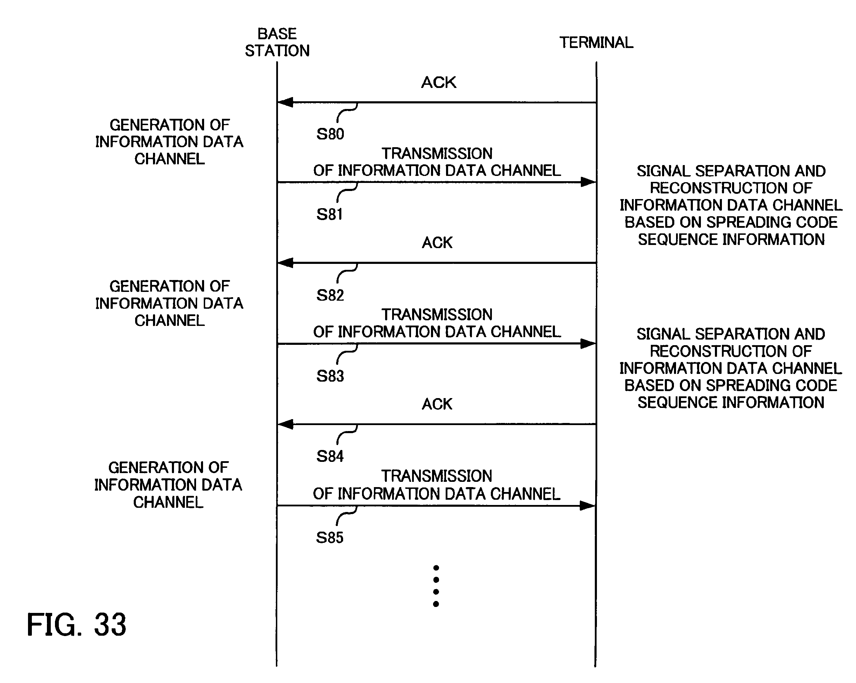

Referring to FIGs.31 to 33, described next is an example of applying the signal separating apparatus (signal separating method) described in this embodiment to communications performed between a base station and a terminal in a wireless communication system. FIG.31 is a sequence diagram illustrating an example of exchange of the control channel and the information data channel. FIG.32 is another sequence diagram illustrating an example of exchange of the control channel and the information data channel. FIG.33 is a sequence diagram illustrating an example of exchange of the information data channel when the spreading code sequence information is beforehand known between the base station and the terminal. In FIGs.31 to 33, the terminal has the configuration of the receiving apparatus 200 as shown in FIG.29. The exchange of data between the base station and the terminal will be described below.

FIG.31 shows the case where the base station notifies the terminal of the control channel to inform of the spreading code sequence information in starting communications. First, the base station generates a control channel signal including spreading code sequences, transmits the signal to the terminal, and thereby notifies the terminal of the spreading code sequence information (S60). The control channel can be in a wireless communication scheme such as MC-CDM (Multi-Carrier Code Division Multiplexing) scheme, OFDM (Orthogonal Frequency Division Multiplexing) scheme, single-carrier scheme and the like, and only requires a format enabling the terminal to reconstruct the spreading code sequences.

Upon receiving the control channel, the terminal performs reconstruction processing such as modulation, coding and the like, acquires the spreading code sequence information in the control channel reconstruction section 201, and transmits an ACK signal indicative of reception of the spreading code sequence information to the base station (S61). Upon receiving the ACK signal, the base station generates an information data channel according to the spreading code sequence described on the control channel to transmit to the terminal (S62).

Upon receiving the information data channel, the terminal determines a signal cancellation order in the signal cancellation order determining section 110 based on the spreading code sequence information acquired by the control channel reconstruction processing in the control channel reconstruction section 201, and according to the determined signal cancellation order, performs signal separation and information data reconstruction. When further needing information data, the terminal transmits an ACK signal to the base station (S63). Upon receiving the ACK signal again, the base station generates an information data channel to transmit to the terminal (S64). When the terminal needs an information data channel again subsequent to step S65, the terminal repeats steps S63 and S64.

Thus, before transmitting an information data channel, the base station transmits a control channel including the spreading code sequence information, and the terminal performs signal cancellation order determination, signal separation and reconstruction on an information data channel received after receiving the control channel, based on the spreading code sequence information obtained from the control channel.

Described next is the case where the timing at which the base station notifies of a control channel is different from that in FIG.31. FIG.32 shows the case where the base station notifies the terminal of a control channel to inform of the spreading code sequence information whenever transmitting an information data channel. First, the base station generates a control channel signal including spreading code sequences, transmits the signal to the terminal, and thereby notifies the terminal of the spreading code sequence information (S70). The control channel can be in a wireless communication scheme such as MC-CDM scheme, OFDM scheme, single-carrier scheme and the like, and only requires a format enabling the terminal to reconstruct the spreading code sequences.

Upon receiving the control channel, the terminal performs reconstruction processing such as modulation, coding and the like, acquires the spreading code sequence information in the control channel reconstruction section 201, and transmits an ACK signal indicative of reception of the spreading code sequence information to the base station (S71). Upon receiving the ACK signal, the base station generates an information data channel according to the spreading code sequence described on the control channel to transmit to the terminal (S72).

Upon receiving the information data channel, the terminal determines a signal cancellation order in the signal cancellation order determining section 110 based on the spreading code sequence information acquired by the control channel reconstruction processing in the control channel reconstruction section 201, and according to the determined signal cancellation order, performs signal separation and information data reconstruction. When further needing information data, the terminal transmits an ACK signal to the base station (S73). Upon receiving the ACK signal again, the base station generates again a control channel signal including the spreading code sequence information, transmits the signal to the terminal, and thereby notifies the terminal of the spreading code sequence information (S74).

Upon receiving the control channel, the terminal performs the reconstruction processing such as modulation, coding and the like as in the last time, acquires the spreading code sequence information, and transmits an ACK signal indicative of reception of the spreading code sequence information to the base station (S75). Upon receiving the ACK signal, the base station generates an information data channel according to the spreading code sequence described on the control channel to transmit to the terminal (S76). When the terminal needs an information data channel again subsequent to step S77, the terminal repeats steps S73 to S76.

Thus, before transmitting an information data channel, the base station transmits a control channel each time, and thereby notifies the spreading code sequence information, and whenever receiving the information, the terminal performs signal cancellation order determination, signal separation and reconstruction based on the spreading code sequence information received prior to the information channel data.

In addition, FIG.32 shows the case where the control channel is transmitted each time before transmitting control channel data, but the invention is not limited thereto. The base station is capable of transmitting a control channel between information data channels periodically (for example, whenever transmitting the information data channel three times).

Referring to FIG.33, described next is exchange of the information data channel when the spreading code sequence information is already known between the base station and the terminal station. First, when needing an information data channel, the terminal transmits an ACK signal to the base station (S80). Upon receiving the ACK signal, the base station generates the information data channel according to the spreading code sequence beforehand known between the base station and the terminal, and transmits the channel to the terminal (S81).

Upon receiving the information data channel, the terminal determines a signal cancellation order based on the spreading code sequence information beforehand known between the base station and the terminal, and according to the determined signal cancellation order, performs signal separation and information data reconstruction. When further needing information data, the terminal transmits an ACK signal to the base station (S82). When the terminal needs an information data channel again subsequent to step S83, the terminal repeats steps S81 and S82 (steps S84 and S85).

Thus, in the case where the spreading code sequence information is beforehand known between the base station and the terminal, the base station generates an information data channel according to the spreading code sequence beforehand known between the base station and the terminal when receiving a signal for requesting the information data channel from the terminal, and the terminal performs signal cancellation order determination, signal separation and reconstruction on the information data channel based on the spreading code sequence information beforehand known between the base station and the terminal.

In addition, this embodiment describes the case that spreading factors of spreading code sequences multiplied by respective channels are the same, but the invention is not limited to such a case, and is applicable to the case where spreading factors of spreading code sequences vary with channels.

(Ninth embodiment) The ninth embodiment describes a cancellation order determining method when spreading factors of multiplexed code channels are different from one another. In this embodiment, descriptions are made using the kinship distance calculated from a generation code tree as a spreading code accuracy extraction value as described in the sixth embodiment.

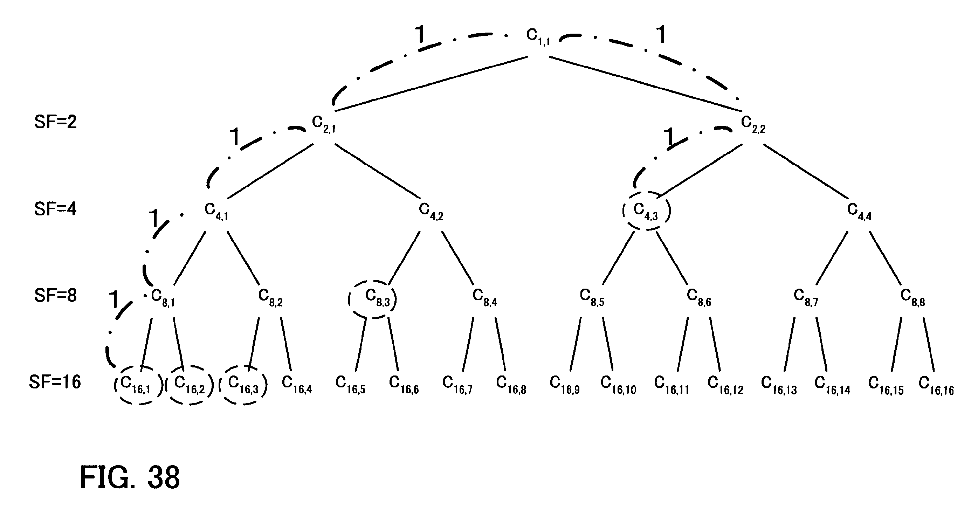

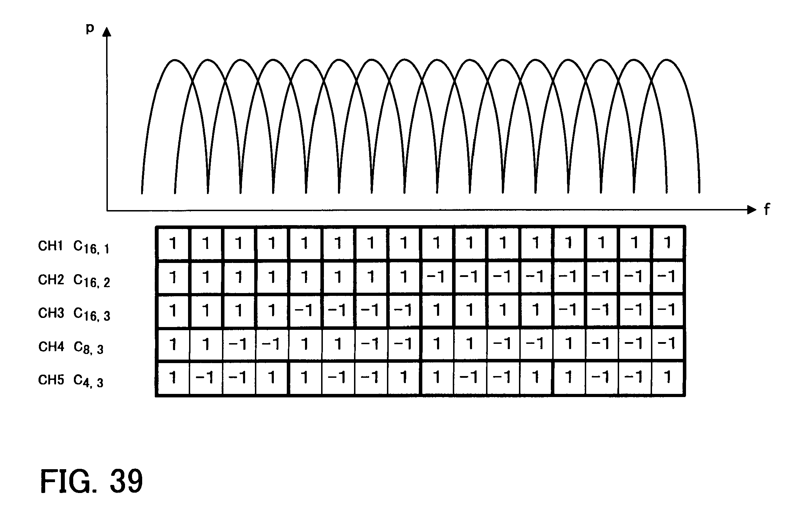

FIG.38 is a diagram showing an example of a generation code tree of OVSF code sequences with SF=16. This embodiment describes cancellation order determination using kinship distances using as an example the case where the receiving apparatus receives a code-multiplexed signal of channel signals multiplied by $C_{16,1}$, $C_{16,2}$, $C_{16,3}$, $C_{8,3}$, and $C_{4,3}$ dashed-line circled in FIG.38, i.e. a signal multiplexed by channel signals multiplied by spreading codes $C_{16,1}$, $C_{16,2}$ and $C_{16,3}$ with a spreading factor SF of 16 (SF=16), a spreading code $C_{8,3}$ with a spreading factor SF of 8 (SF=8), and a spreading code $C_{4,3}$ with a spreading factor SF of 4 (SF=4). FIG.39 is a diagram showing a code-multiplexed signal obtained by multiplying channels by spreading code sequences dashed-line circled in FIG.38 in MC-CDM as an example of a code-multiplexed received signal of channels multiplied by spreading code sequences with different spreading factors. A unit surrounded by bold line shows the spreading factor of a spreading code multiplied by each channel. Described next is a cancellation order determining method in the case of receiving the signal as shown in FIG.39.

A configuration of the signal cancellation order determining section of this embodiment is the same as in the sixth embodiment. The code generation distance calculating section 171 performs calculation of kinship distances between spreading code sequences in the same standard as in the sixth embodiment, based on the spreading code sequence information and the information about the generation code tree stored in the generation code tree storing section 151. When acquiring the spreading code sequence information that spreading code sequences multiplied by respective channels are $C_{16,1}$, $C_{16,2}$, $C_{16,3}$, $C_{8,3}$, and $C_{4,3}$ as shown in FIG. 38, the section 171 calculates the kinship distances among five spreading code sequences. For example, in the case of focusing on the spreading code $C_{4,3}$, when the kinship distance with each of the other four spreading code sequences is calculated, the kinship distance between $C_{4,3}$ and $C_{16,1}$ is obtained through a common higher code $C_{1,1}$ and "6" (alternate long and short dashed lines in FIG.38). Similarly, the kinship distances between $C_{4,3}$ and each of $C_{16,2}$, $C_{16,3}$, and $C_{8,3}$ are respectively "6", "6", and "5". In the case of focusing on the spreading code $C_{16,1}$, the kinship distances between $C_{16,1}$ and each of the other four spreading code sequences, $C_{16,2}$, $C_{16,3}$, $C_{8,3}$ and $C_{4,3}$, are "2", "4", "5" and "6", respectively. Similarly, focusing on each of $C_{16,2}$, $C_{16,3}$ and $C_{8,3}$, the kinship distances with the other four spreading code sequences are calculated.

The order determining section 172 first selects spreading code sequences in descending order of maintenance of the orthogonality, based on the kinship distances calculated by the code generation distance calculating section 171. More specifically, the order determining section 172 selects a spreading code having the highest sum total of calculation results of kinship distances between each spreading code sequence and each of spreading code sequences multiplied by interfering channels (non-desired channel). Alternately, it is also possible to select a spreading code sequence with a highest minimum value among the kinship distances between each spreading code sequence and each of spreading code sequences multiplied by interfering channels and with the highest number of minimum values. For example, in FIG.38, in the code generation distance calculating section 171, the kinship distances between $C_{4,4}$ and each of the other four spreading codes, $C_{16,1}$, $C_{16,2}$, $C_{16,3}$ and $C_{8,3}$, are respectively "6", "6", "6" and "5", the minimum value is "5", and the number of minimum values is "1". Similarly, for all the spreading code sequences, the section 171 calculates minimum values of the kinship distance to notify to the order determining section 172. The order determining section 172 notifies the code generation distance calculating section 171 of the spreading code sequence with the highest minimum value of the kinship distance and the highest number of minimum values. Herein, minimum values of the kinship distance are calculated for all the spreading code sequences and notified to the order determining section 172, but the invention is not limited thereto. It is possible to substitute calculating the sum total of kinship distances calculated between each of all the spreading code sequences and each of spreading code sequences multiplied by interfering channel signals to notify to the order determining section 172. The other operation of the cancellation order determining section 170 is illustrated in the flowchart as shown in FIG.22, and is the same as in the sixth embodiment. When spreading factors of spreading code sequences multiplied by multiplexed channels are different, it is possible to perform channel separation with high accuracy by calculating spreading code accuracy extraction values by the method as described in the foregoing, and complying with the order determined based on the calculated spreading code accuracy extraction values.

In addition, this embodiment describes the case of using the kinship distance calculated from a generation code tree as a spreading code accuracy extraction value as described in the sixth embodiment. However, the invention is not limited thereto, and it is possible to determine a cancellation order according to the means described in the first to seventh embodiments. Further, in this embodiment, the spreading code accuracy extraction value indicative of tolerance to interference from a non-desired channel is calculated using the kinship distance from the viewpoint of the amount of interference imposed on each channel. Further, it is possible to calculate tolerance to interference by a non-desired channel using a spreading factor i.e. spreading gain as a spreading code accuracy extraction value.

Further, each of the above-mentioned embodiments is described on the assumption that the received signal power or SINR of each channel is the same. However, the signal cancellation order determining means according to the invention is not limited to the case where the received signal power or SINR of each channel is the same, and is applicable to the case where the received signal power or SINR varies with channels. For example, the channel signal cancellation order is first determined based on the received signal power, and then, modified based on characteristics of spreading code sequences, or the inverse procedures may be performed.

As described above, according to the preferred embodiments according to the invention, in the signal separating apparatus (interference canceller), even when the received signal power or SINR of each channel signal is the same, it is possible to perform effective signal separation order determination (determination of a channel signal cancellation order). As a result, signals except a desired channel signal can be cancelled with higher accuracy, and it is possible to suppress performance degradation caused by deterioration of the orthogonality between spreading code sequences. Further, also when the received signal power or SINR of channel signals is different, by applying the present invention, since a channel cancellation order can be determined based on characteristics of spreading code sequences in addition to the received signal power or SINR, it is possible to cancel a non-desired channel signal with higher accuracy.

**Claims**

1. A signal separating apparatus that cancels channel signals from a plurality of code-multiplexed channel signals multiplied by spreading code sequences based on spreading code sequence information about the spreading code sequences, **characterized by** comprising:

   a signal cancellation order determining section (110) which receives the spreading code sequence information input thereto, and based on the input spreading code sequence information, determines a channel cancellation order for canceling channel signals; and
   a signal canceling section (120) that cancels part of channel signals from the plurality of channel signals as claimed in the determined channel signal cancellation order.

2. The signal separating apparatus (110) as claimed in claim 1, **characterized in that** the signal cancellation order determining section calculates a code extraction accuracy value indicative of a degree of maintenance of orthogonality between a spreading code sequence multiplied by a desired channel signal and a spreading code sequence multiplied by a non-desired channel signal, and based on a level of the calculated code extraction accuracy value, determines the channel cancellation order.

3. The signal separating apparatus (110) as claimed in claim 2, **characterized in that** the signal cancellation order determining section has a correlation duration determining section (112) that sets a value less than or equal to a length of the spreading code sequence as a correlation duration length,
   a correlation value calculating section (113) that calculates a correlation value between the spreading code sequence multiplied by the desired channel signal and the spreading code sequence multiplied by the non-desired channel signal for the set correlation duration length,
   a code extraction accuracy calculating section (114) that calculates a code extraction accuracy value using the calculated correlation value, and
   an order determining section (115) that determines the channel cancellation order starting with a channel signal multiplied by a spreading code sequence with a higher degree of maintenance of orthogonality in descending order of the maintenance of orthogonality, based on the calculated code extraction accuracy value.

4. The signal separating apparatus as claimed in claim 3, **characterized in that** the correlation duration setting section (112) sets a correlation duration length less than the length of the spreading code sequence,
   the correlation value calculating section (113) assigns the set correlation duration length to different positions of the spreading code sequence to calculate a plurality of correlation values, and
   the code extraction accuracy calculating section (114) adds the calculated plurality of correlation values to calculate the code extraction accuracy value.

5. The signal separating apparatus as claimed in claim 3 or 4, **characterized in that** the correlation duration setting section (112) sets a duration obtained by dividing the spreading code sequence by $2^n$ (n is a positive integer) as a correlation duration length.

6. The signal separating apparatus as claimed in any one of claims 3 to 5, **characterized in that** the correlation duration setting section (112) sets a correlation duration length based on a reciprocal of delay spread.

7. The signal separating apparatus as claimed in claim 6, **characterized in that** the correlation duration setting section (112) sets a duration shorter than a length of a multiple of the reciprocal of delay spread as a correlation duration length.

8. The signal separating apparatus as claimed in claim 2, **characterized in that** the signal cancellation order determining section (150) has a generation code tree storing section (151) that stores information about a generation code tree to generate the spreading code sequences,
a code dividing section (152) that divides the generation code tree into a plurality of blocks using a duration of a higher code to generate spreading code sequences,
a code extraction accuracy calculating section (153) that calculates the number of spreading code sequences multiplied by respective channel signals among spreading code sequences included in the divided block as a code extraction accuracy value, and
an order determining section (154) that determines a channel cancellation order starting with a channel signal multiplied by a spreading code sequence with a higher degree of maintenance of orthogonality in descending order of the maintenance of orthogonality, based on the calculated code extraction accuracy value.

9. The signal separating apparatus as claimed in claim 1, **characterized in that** the signal cancellation order determining section (160) has a code extraction accuracy storing section (161) that stores a code extraction accuracy value obtained by calculating a degree of maintenance of orthogonality between a spreading code sequence multiplied by a desired channel signal and a spreading code sequence multiplied by a non-desired channel signal based on the spreading code sequence information,
a code extraction accuracy searching section (162) which analyzes the spreading code sequence multiplied by each channel signal of the received signal based on the spreading code sequence information, searches the code extraction accuracy storing section, and acquires the code extraction accuracy value corresponding to the analyzed spreading code sequence, and
an order determining section (163) that determines a channel cancellation order starting with a channel signal multiplied by a spreading code sequence with a higher degree of maintenance of orthogonality in descending order of the maintenance of orthogonality, based on the acquired code extraction accuracy value.

10. The signal separating apparatus as claimed in claim 9, **characterized in that** the code extraction accuracy storing section (161) calculates a correlation value between the spreading code sequence multiplied by the desired channel signal and the spreading code sequence multiplied by the non-desired channel signal for a set correlation duration length, and stores a code extraction accuracy value calculated by using the calculated correlation value.

11. The signal separating apparatus as claimed in claim 9 or 10, **characterized in that** the code extraction accuracy storing section (161) divides a generation code tree into a plurality of blocks using a duration of a higher code to generate spreading code sequences, and stores a code extraction accuracy value obtained by calculating the number of spreading code sequences multiplied by respective channel signals among spreading code sequences included in the divided block.

12. The signal separating apparatus as claimed in claim 1, **characterized in that** the signal cancellation order determining section (170) has a generation code tree storing section (151) that stores information about a generation code tree to generate the spreading code sequences,
a code generation distance calculating section (171) that calculates a kinship distance between spreading code sequences based on the information about the generation code tree, and
an order determining section (172) that determines a channel cancellation order starting with a channel signal multiplied by a spreading code sequence with a higher degree of maintenance of orthogonality in descending order of the maintenance of orthogonality, based on the kinship distance calculated by the code generation distance calculating section.

13. The signal separating apparatus as claimed in claim 12, **characterized in that** the order determining section (172) repeats selecting a spreading code sequence with a higher degree of maintenance of orthogonality based on the kinship distance, notifying the code generation distance calculating section of the selected spreading code sequence, acquiring a kinship distance between spreading code sequences that is calculated again by the code generation distance calculating section while omitting the notified spreading code sequence, and sequentially selecting a spreading code sequence with a higher degree of maintenance of orthogonality based on the acquired kinship distance, and determines a channel cancellation order in the order in which the spreading code sequence multiplied by a channel signal is selected, and

the code generation distance calculating section (171) acquires the spreading code sequence selected by the order determining section, calculates a kinship distance between spreading code sequences except the acquired spreading code sequence, and outputs the calculated kinship distance between spreading code sequences to the order determining section.

14. The signal separating apparatus as claimed in claim 3, **characterized in that** the order determining section (115) repeats selecting a spreading code sequence with a higher degree of maintenance of orthogonality based on the calculated code extraction accuracy value, notifying the code extraction accuracy calculating section of the selected spreading code sequence, acquiring a code extraction accuracy value between spreading code sequences that is calculated again by the code extraction accuracy calculating section while omitting the notified spreading code sequence, and sequentially selecting a spreading code sequence with a higher degree of maintenance of orthogonality based on the acquired code extraction accuracy value between spreading code sequences, and determines a channel cancellation order in the order in which the spreading code sequence multiplied by a channel signal is selected, and

the code extraction accuracy calculating section (114) acquires the selected spreading code sequence from the order determining section, calculates a code extraction accuracy value between spreading code sequences except the acquired spreading code sequence, and outputs the calculated code extraction accuracy value between spreading code sequences to the order determining section.

15. A signal separating apparatus that cancels channel signals from a plurality of code-multiplexed channel signals multiplied by spreading code sequences based on spreading code sequence information about the spreading code sequences, **characterized by** comprising:

a cancellation order storing section (181) that stores a signal cancellation order which is determined from a degree of maintenance of orthogonality between a spreading code sequence multiplied by a desired channel signal and a spreading code sequence multiplied by a non-desired channel signal based on the spreading code sequence information;

an order determining section (182) which acquires the signal cancellation order from the cancellation order storing section based on the spreading code sequence information, and determines an order for canceling channel signals multiplied by spreading code sequences from the acquired signal cancellation order; and

a signal canceling section (120) that cancels part of channel signals from the plurality of channel signals as claimed in the determined order of canceling channel signals.

16. The signal separating apparatus as claimed in claim 15, **characterized in that** the cancellation order storing section (181) calculates a kinship distance between spreading code sequences of a spreading code sequence multiplied by a desired channel signal and a spreading code sequence multiplied by a non-desired channel signal, and stores a signal cancellation order obtained by determining a channel cancellation order starting with a channel signal multiplied by a spreading code sequence with a higher degree of maintenance of orthogonality in descending order of the maintenance of orthogonality based on the calculated kinship distance.

17. The signal separating apparatus as claimed in claim 15, **characterized in that** the cancellation order storing section (181) calculates a correlation value between a spreading code sequence multiplied by a desired channel signal and a spreading code sequence multiplied by a non-desired channel signal for a beforehand set correlation duration length, calculating a code extraction accuracy value indicative of a degree of maintenance of orthogonality between the spreading code sequence multiplied by the desired channel signal and the spreading code sequence multiplied by the non-desired channel signal using the calculated correlation value, and stores a signal cancellation order that is determined based on the calculated code extraction accuracy value.

18. The signal separating apparatus as claimed in claim 15, **characterized in that** the cancellation order storing section (181) divides a generation code tree into a plurality of blocks using a duration of a higher code to generate spreading code sequences, calculates a code extraction accuracy value indicative of a degree of maintenance of orthogonality between the spreading code sequence multiplied by the desired channel signal and the spreading code sequence multiplied by the non-desired channel signal using the number of spreading code sequences multiplied by respective channel signals among spreading code sequences included in divided blocks, and stores a signal cancellation order determined from the calculated code extraction accuracy value.

19. The signal separating apparatus as claimed in any one of claims 1 to 18, **characterized in that** the spreading factor of the spreading code sequence varies with each channel signal.

20. A communication apparatus **characterized by** comprising:

a receiving section (101,102) that receives a plurality of code-multiplexed channel signals multiplied by spreading code sequences, and spreading code sequence information about the spreading code sequences; and
the signal separating apparatus (110,120) as claimed in any one of claims 1 to 19.

21. The communication apparatus as claimed in claim 20, **characterized in that** the receiving section (101,102) receives a control channel signal including the spreading code sequence information, and
the apparatus further has a control channel reconstruction section (201) that reconstructs the control channel signal to acquire the spreading code sequence information.

22. A signal separating method for canceling channel signals from a plurality of code-multiplexed channel signals multiplied by spreading code sequences based on spreading code sequence information about the spreading code sequences, **characterized by**:

receiving the spreading code sequence information, and determining a channel cancellation order for canceling channel signals based on the input spreading code sequence information; and
canceling part of channel signals from the plurality of channel signals as claimed in the determined channel signal cancellation order.

FIG. 1

100 : RECEIVING APPARATUS

110 SIGNAL CANCELLATION ORDER DETERMINING SECTION

105 PROPAGATION PATH ESTIMATING SECTION

106 WEIGHTING COEFFICIENT CALCULATING SECTION

101

102 SIGNAL SHAPING SECTION

103 SERIAL-PARALLEL TRANSFORMING SECTION

104 FFT SEC-TION

120 SIGNAL CANCE-LING SEC-TION

131 PROPA-GATION PATH DISTOR-TION CORREC-TING SECTION

132 DESPREA-DING SECTION

133 PARALLEL-SERIAL TRANSFOR-MING SECTION

134 DEMO-DULA-TION SEC-TION

135 ERROR CORREC-TING DECOD-ING SECTION

130c
130b
130a

EACH-CHANNEL SIGNAL PROCESSING SECTION

107 MAC SECTION

EP 1 983 653 A1

33

FIG. 2

CHANNEL SIGNAL CANCELLATION ORDER (TO SIGNAL CANCELING SECTION 120)

110 — SIGNAL CANCELLATION ORDER DETERMINING SECTION

115 ORDER DETERMINING SECTION

114 CODE EXTRACTION ACCURACY CALCULATING SECTION

112 CORRELATION DURATION DETERMINING SECTION

113 CORRELATION VALUE CALCULATING SECTION

111 SPREADING CODE GENERATING SECTION

SPREADING CODE SEQUENCE INFORMATION

SPREADING CODE SEQUENCES (TO SIGNAL CANCELING SECTION 120 AND DESPREADING SECTION 132)

CHANNEL SIGNAL CANCELLATION ORDER

120

OUTPUT
SIGNAL
FROM FFT
SECTION 104

121

SWITCH
-ING
SECTION

TO PROPAGATION
PATH DISTORTION
CORRECTING
SECTION 131

122

127

126    125    124    123

128 : SUBTRACTING
SECTION

+

PROPAGATION
PATH
CHARACTERIS
-TIC WEIGHTING
SECTION

SPREA-
DING
SEC
-TION

SERIAL-
PARALLEL
TRANSFOR-
MING
SECTION

MODU
-LATION
SEC
-TION

CODING
SECTION

OUTPUT SIGNAL FROM
ERROR CORRECTING
DECODING SECTION 135

−

REPLICA GENERATING SECTION

SIGNAL CANCELING SECTION

PROPAGATION PATH
ESTIMATION VALUE

SPREADING CODE SEQUENCES

FIG. 3

EP 1 983 653 A1

35

FIG. 4

OUTPUT SIGNAL FROM
FFT SECTION 104

$w_i^0(k)$

131a

132a

$c^0(k)$

133a 134a 135a

130a : EACH-CHANNEL
SIGNAL PROCESSING
SECTION

$\lambda_i^0(n)$

128 : SUBTRACTING
SECTION (FIRST TIME)

+

−

$\hat{H}^0(k)$

127 126

125

124

123

122

REPLICA GENERATING SECTION (FIRST TIME)

$w_i^1(k)$

131b

132b

133b 134b 135b

130b : EACH-CHANNEL
SIGNAL PROCESSING
SECTION

$\lambda_i^1(n)$

$\hat{H}^1(k)$ $c^1(k)$

128 : SUBTRACTING
SECTION(SECOND TIME)

+

−

127 126

125

124

123

122

REPLICA GENERATING SECTION (SECOND TIME)

120: SIGNAL CANCELING
SECTION

$w_i^2(k)$

131c

132c

$c^2(k)$

133c 134c 135c

130c : EACH-CHANNEL
SIGNAL PROCESSING
SECTION

$\lambda_i^2(n)$

EP 1 983 653 A1

START

↓

RECEPTION — S11

↓

ACQUISITION OF SPREADING
CODE SEQUENCE INFORMATION
(SPREADING CODE SEQUENCES,
CODE LENGTH SF) — S12

↓

DETERMINATION OF CORRELATION
VALUE CALCULATION DURATION
LENGTH d AND SHIFT AMOUNT s — S13

↓

CALCULATION OF CORRELATION VALUE
IN EACH d AND s — S14

↓

CALCULATION OF CODE EXTRACTION
ACCURACY — S15

↓

DETERMINATION OF CHANNEL SIGNAL
CANCELLATION ORDER — S16

↓

END

FIG. 5

FIG. 6

FIG. 7

START

RECEPTION — S21

ACQUISITION OF SPREADING
CODE INFORMATION
(SPREADING CODE SEQUENCES,
CODE LENGTH SF) — S22

DETERMINATION OF CORRELATION
VALUE CALCULATION DURATION
LENGTH d AND SHIFT AMOUNT s — S23

CALCULATION OF CORRELATION
VALUE IN d — S24

CALCULATION OF CODE EXTRACTION
ACCURACY — S25

No          d IS MINIMUM UNIT ? — S26

Yes

IS THERE ANY CODE
SEQUENCE WITH THE SAME CODE
EXTRACTION ACCURACY AS
THE CALCULATED
ACCURACY ? — S27

Yes          No

ESTABLISHMENT OF SPREADING
CODE SEQUENCE PREFERENTIAL
ORDER — S28

FIG. 8

END

FIG. 9

p

f(FREQUENCY)

SF=8

| | | | | | | | | |
|---|---|---|---|---|---|---|---|---|
| $C_{8,1}$ | 1 | 1 | 1 | 1 | 1 | 1 | 1 | 1 |
| $C_{8,2}$ | 1 | 1 | 1 | 1 | -1 | -1 | -1 | -1 |
| $C_{8,7}$ | 1 | -1 | -1 | 1 | 1 | -1 | -1 | 1 |

**FIG. 10**

p

df

PROPAGATION PATH 1

f(FREQUENCY)

| | | | | | | | | |
|---|---|---|---|---|---|---|---|---|
| $C_{8,1}$ | 1 | 1 | 1 | 1 | 0 | 0 | 0 | 0 |
| $C_{8,2}$ | 1 | 1 | 1 | 1 | 0 | 0 | 0 | 0 |
| $C_{8,7}$ | 1 | -1 | -1 | 1 | 0 | 0 | 0 | 0 |

**FIG. 11**

| | | | | | | | | |
|---|---|---|---|---|---|---|---|---|
| $C_{8,1}$ | 1 | 1 | 1 | 1 | 0 | 0 | 0 | 0 |
| $C_{8,2}$ | 1 | 1 | 1 | 1 | 0 | 0 | 0 | 0 |
| $C_{8,7}$ | 1 | -1 | -1 | 1 | 0 | 0 | 0 | 0 |

× $C_{8,1}$

| 1 | 1 | 1 | 1 | 1 | 1 | 1 | 1 |
|---|---|---|---|---|---|---|---|

⟹

| 4 |
|---|
| 4 |
| 0 |

**FIG. 12**

FIG. 13

FIG. 14

EP 1 983 653 A1

START

RECEPTION — S31

CALCULATION OF PROPAGATION
PATH ESTIMATION VALUE H^ — S37

ACQUISITION OF SPREADING CODE
SEQUENCE INFORMATION
(SPREADING CODE SEQUENCES,
CODE LENGTH SF) — S32

CALCULATION OF DELAY SPREAD — S38

CALCULATION OF FREQUENCY
VARIATION PITCH $df = \alpha / \sigma$ — S39

DETERMINATION OF CORRELATION
VALUE CALCULATION DURATION
LENGTH d AND SHIFT AMOUNT s — S33

CALCULATION OF CORRELATION
VALUE IN EACH d AND s — S34

CALCULATION OF CODE
EXTRACTION ACCURACY — S35

DETERMINATION OF CHANNEL
SIGNAL CANCELLATION ORDER — S36

END

FIG. 15

SF=2

SF=4

SF=8

SF=16

$C_{1,1}$

$C_{2,1}$     $C_{2,2}$

$C_{4,1}$   $C_{4,2}$   $C_{4,3}$   $C_{4,4}$

$C_{8,1}$   $C_{8,2}$   $C_{8,3}$   $C_{8,4}$   $C_{8,5}$   $C_{8,6}$   $C_{8,7}$   $C_{8,8}$

$(C_{16,1})$ $(C_{16,2})$ $(C_{16,3})$ $C_{16,4}$ $C_{16,5}$ $C_{16,6}$ $C_{16,7}$ $(C_{16,8})$ $C_{16,9}$ $C_{16,10}$ $C_{16,11}$ $(C_{16,12})$ $C_{16,13}$ $C_{16,14}$ $C_{16,15}$ $(C_{16,16})$

| $B_{SF=8}$ | 2 | | 1 | | 0 | | 1 | | 0 | | 1 | | 0 | | 1 | |
|---|---|---|---|---|---|---|---|---|---|---|---|---|---|---|---|---|
| $B_{SF=4}$ | 3 | | | | 1 | | | | 1 | | | | 1 | | | |
| $B_{SF=2}$ | 4 | | | | | | | | 2 | | | | | | | |
| CANCELLATION ORDER | 5 | 6 | 4 | | | | | 3 | | | | 1 | | | | 2 |

FIG. 16

FIG. 17

SPREADING
CODE
SEQUENCE
INFORMATION

150

151
GENERATION
CODE TREE
STORING
SECTION

152
CODE DIVIDING
SECTION

153
CODE EXTRACTION
ACCURACY
CALCULATING
SECTION

154
ORDER
DETERMINING
SECTION

155
SPREADING
CODE
GENERATING
SECTION

SIGNAL CANCELLATION ORDER
DETERMINING SECTION

CHANNEL SIGNAL
CANCELLATION ORDER
(TO SIGNAL CANCELING
SECTION 120)

SPREADING CODE SEQUENCES
(TO SIGNAL CANCELING SECTION 120
AND DESPREADING SECTION 132)

EP 1 983 653 A1

START

S41
RECEPTION

S42
ACQUISITION OF SPREADING CODE
INFORMATION (SPREADING CODE
SEQUENCES, CODE LENGTH SF)

S43
READ OF GENERATION CODE TREES

S44
DIVISION INTO CODE SEQUENCE
BLOCKS

S45
CALCULATION OF CODE EXTRACTION
ACCURACY

S46
DETERMINATION OF SPREADING
CODE SEQUENCE PREFERENTIAL
ORDER

S47
No ◁ BLOCK IS MINIMUM UNIT ?

S48
IS THERE ANY
CODE SEQUENCE WITH
THE SAME CODE EXTRACTION ACCURACY
AS THE CALCULATED ACCURACY ?

Yes

Yes

No

S49
ESTABLISHMENT OF SPREADING
CODE SEQUENCE PREFERENTIAL
ORDER

END

FIG. 18

FIG. 19

EP 1 983 653 A1

FIG. 20

EP 1 983 653 A1

170

151

GENERATION CODE
TREE STORING
SECTION

171

172

SPREADING CODE
SEQUENCE
INFORMATION

CODE GENERATION
DISTANCE
CALCULATING SECTION

ORDER
DETERMINING
SECTION

CHANNEL SIGNAL
CANCELLATION ORDER
(TO SIGNAL CANCELING
SECTION 120)

155

SPREADING CODE
GENERATING SECTION

SIGNAL CANCELLATION ORDER
DETERMINING SECTION

SPREADING CODE SEQUENCES
(TO SIGNAL CANCELING SECTION 120
AND DESPREADING SECTION 132)

FIG. 21

START

RECEPTION — S51

ACQUISITION OF SPREADING CODE
INFORMATION
(SPREADING CODE SEQUENCES,
CODE LENGTH SF) — S52

READ OF GENERATION CODE TREES — S53

CALCULATION OF CODE GENERATION
DISTANCE — S54

SELECTION AND NOTIFICATION OF
CANCELLATION CHANNEL — S55

ALL THE SPREADING
CODE SEQUENCES ARE
SELECTED ? — S56

No

Yes

ESTABLISHMENT OF SPREADING CODE
SEQUENCE PREFERENTIAL ORDER — S57

END

FIG. 22

| | $C_{16,1}$ | $C_{16,2}$ | $C_{16,3}$ | $C_{16,8}$ | $C_{16,12}$ | $C_{16,16}$ | SUM TOTAL |
|---|---|---|---|---|---|---|---|
| $C_{16,1}$ | | 2 | 4 | 6 | 8 | 8 | 28 |
| $C_{16,2}$ | 2 | | 4 | 6 | 8 | 8 | 28 |
| $C_{16,3}$ | 4 | 4 | | 6 | 8 | 8 | 30 |
| $C_{16,8}$ | 6 | 6 | 6 | | 8 | 8 | 34 |
| $C_{16,12}$ | 8 | 8 | 8 | 8 | | 6 | 38 |
| $C_{16,16}$ | 8 | 8 | 8 | 8 | 6 | | 38 |

FIG. 23

EP 1 983 653 A1

FIG. 24

EP 1 983 653 A1

| | $C_{16,1}$ | $C_{16,2}$ | $C_{16,3}$ | $C_{16,8}$ | $C_{16,16}$ | SUM TOTAL |
|---|---|---|---|---|---|---|
| $C_{16,1}$ | | 2 | 4 | 6 | 8 | 20 |
| $C_{16,2}$ | 2 | | 4 | 6 | 8 | 20 |
| $C_{16,3}$ | 4 | 4 | | 6 | 8 | 22 |
| $C_{16,8}$ | 6 | 6 | 6 | | 8 | 26 |
| $C_{16,16}$ | 8 | 8 | 8 | 8 | | 32 |

FIG. 25

SPREADING CODE SEQUENCE INFORMATION (NUMBER-OF-MULTIPLEX INFORMATION)

CHANNEL SIGNAL CANCELLATION ORDER (TO SIGNAL CANCELING SECTION 120)

180

181 CANCELLATION ORDER STORING SECTION

182 ORDER DETERMINING SECTION

183 SPREADING CODE GENERATING SECTION

SIGNAL CANCELLATION ORDER DETERMINING SECTION

SPREADING CODE SEQUENCES (TO SIGNAL CANCELING SECTION 120 AND DESPREADING SECTION 132)

FIG. 26

EP 1 983 653 A1

CANCELLATION ORDER

$C_{16,3}$ | $C_{16,5}$ | $C_{16,9}$ | $C_{16,13}$

**FIG. 27A**

CANCELLATION ORDER

$C_{16,2}$ | $C_{16,3}$ | $C_{16,5}$ | $C_{16,7}$ | $C_{16,9}$ | $C_{16,11}$ | $C_{16,13}$ | $C_{16,15}$

**FIG. 27B**

CANCELLATION ORDER

$C_{16,2}$ | $C_{16,3}$ | $C_{16,4}$ | $C_{16,5}$ | $C_{16,6}$ | $C_{16,7}$ | $C_{16,9}$ | $C_{16,10}$ | $C_{16,11}$ | $C_{16,13}$ | $C_{16,14}$ | $C_{16,15}$

**FIG. 27C**

| | $C_{16,3}$ | $C_{16,5}$ | $C_{16,9}$ | $C_{16,13}$ | SUM TOTAL |
|---|---|---|---|---|---|
| $C_{16,3}$ | | 6 | 8 | 8 | 22 |
| $C_{16,5}$ | 6 | | 8 | 8 | 22 |
| $C_{16,9}$ | 8 | 8 | | 6 | 22 |
| $C_{16,13}$ | 8 | 8 | 6 | | 22 |

⟹ $C_{16,3}$

## FIG. 28A

| | $C_{16,5}$ | $C_{16,9}$ | $C_{16,13}$ | SUM TOTAL |
|---|---|---|---|---|
| $C_{16,5}$ | | 8 | 8 | 16 |
| $C_{16,9}$ | 8 | | 6 | 14 |
| $C_{16,13}$ | 8 | 6 | | 14 |

⟹ $C_{16,5}$

## FIG. 28B

| | $C_{16,9}$ | $C_{16,13}$ | SUM TOTAL |
|---|---|---|---|
| $C_{16,9}$ | | 6 | 6 |
| $C_{16,13}$ | 6 | | 6 |

⟹ $C_{16,9}$

## FIG. 28C

EP 1 983 653 A1

FIG. 29

EP 1 983 653 A1

| CONTROL CHANNEL | INFORMATION DATA | INFORMATION DATA |
|---|---|---|

t

FIG. 30

BASE
STATION

TERMINAL

GENERATION OF CONTROL
CHANNEL INCLUDING
SPREADING CODE
SEQUENCES

NOTIFICATION OF SPREADING CODE
SEQUENCE INFORMATION

S60

RECONSTRUCTION OF CONTROL CHANNEL
ACQUISITION OF SPREADING CODE SEQUENCE
INFORMATION

ACK

GENERATION OF
INFORMATION DATA
CHANNEL

S61

TRANSMISSION OF
INFORMATION DATA CHANNEL

S62

SIGNAL SEPARATION AND
RECONSTRUCTION OF INFORMATION DATA
CHANNEL BASED ON SPREADING CODE
SEQUENCE INFORMATION

ACK

GENERATION OF
INFORMATION DATA
CHANNEL

S63

TRANSMISSION OF
INFORMATION DATA CHANNEL

S64

SIGNAL SEPARATION AND
RECONSTRUCTION OF INFORMATION
DATA CHANNEL BASED ON SPREADING
CODE SEQUENCE INFORMATION

ACK

GENERATION OF
INFORMATION DATA
CHANNEL

S65

TRANSMISSION OF
INFORMATION DATA CHANNEL

S66

FIG. 31

BASE
STATION                                                    TERMINAL

GENERATION OF CONTROL
CHANNEL INCLUDING          NOTIFICATION OF SPREADING CODE
SPREADING CODE                SEQUENCE INFORMATION
SEQUENCES                                                    RECONSTRUCTION OF CONTROL
                                                                      CHANNEL
                              S70                              ACQUISITION OF SPREADING
                                        ACK                   CODE SEQUENCE INFORMATION

GENERATION OF              S71
INFORMATION DATA
CHANNEL                    TRANSMISSION
                        OF INFORMATION DATA CHANNEL            SIGNAL SEPARATION AND
                                                                  RECONSTRUCTION OF
                              S72                            INFORMATION DATA CHANNEL
                                                              BASED ON SPREADING CODE
                                        ACK                    SEQUENCE INFORMATION

GENERATION OF CONTROL      S73
CHANNEL INCLUDING
SPREADING CODE             NOTIFICATION OF SPREADING CODE
SEQUENCES                     SEQUENCE INFORMATION            RECONSTRUCTION OF CONTROL
                                                                      CHANNEL
                              S74                              ACQUISITION OF SPREADING
                                        ACK                   CODE SEQUENCE INFORMATION

GENERATION OF              S75
INFORMATION DATA
CHANNEL                    TRANSMISSION
                        OF INFORMATION DATA CHANNEL            SIGNAL SEPARATION AND
                                                                  RECONSTRUCTION OF
                              S76                            INFORMATION DATA CHANNEL
                                        ACK                   BASED ON SPREADING CODE
                                                              SEQUENCE INFORMATION

FIG. 32                    S77         •
                                       •
                                       •

EP 1 983 653 A1

EP 1 983 653 A1

BASE
STATION                                TERMINAL

                            ACK

GENERATION OF
INFORMATION DATA      S80
CHANNEL
                        TRANSMISSION
                OF INFORMATION DATA CHANNEL            SIGNAL SEPARATION AND
                                                        RECONSTRUCTION OF
                    S81                            INFORMATION DATA CHANNEL
                                                    BASED ON SPREADING CODE
                            ACK                    SEQUENCE INFORMATION

GENERATION OF
INFORMATION DATA      S82
CHANNEL
                        TRANSMISSION
                OF INFORMATION DATA CHANNEL            SIGNAL SEPARATION AND
                                                        RECONSTRUCTION OF
                    S83                            INFORMATION DATA CHANNEL
                                                    BASED ON SPREADING CODE
                            ACK                    SEQUENCE INFORMATION

GENERATION OF
INFORMATION DATA      S84
CHANNEL
                        TRANSMISSION
                OF INFORMATION DATA CHANNEL

                    S85

                             •
                             •
                             •

FIG. 33

CH1 $C_{8,1}$

CH2 $C_{8,2}$

FIG. 34

6dB

FADING

CH1 $C_{8,1}$

CH2 $C_{8,2}$

FIG. 35

81 : BASE STATION

82a : TERMINAL

82b : TERMINAL

FIG. 36

FIG. 37

FIG. 38

EP 1 983 653 A1

| CH1 $C_{16,1}$ | 1 | 1 | 1 | 1 | 1 | 1 | 1 | 1 | 1 | 1 | 1 | 1 | 1 | 1 | 1 | 1 |
| CH2 $C_{16,2}$ | 1 | 1 | 1 | 1 | 1 | 1 | 1 | 1 | -1 | -1 | -1 | -1 | -1 | -1 | -1 | -1 |
| CH3 $C_{16,3}$ | 1 | 1 | 1 | 1 | -1 | -1 | -1 | -1 | 1 | 1 | 1 | 1 | -1 | -1 | -1 | -1 |
| CH4 $C_{8,3}$ | 1 | 1 | -1 | -1 | 1 | 1 | -1 | -1 | 1 | 1 | -1 | -1 | 1 | -1 | -1 | -1 |
| CH5 $C_{4,3}$ | 1 | -1 | -1 | 1 | 1 | -1 | -1 | 1 | 1 | -1 | -1 | 1 | 1 | -1 | -1 | 1 |

FIG. 39

<table>
<tr><td colspan="2" align="center">**INTERNATIONAL SEARCH REPORT**</td><td>International application No.<br>PCT/JP2007/051005</td></tr>
</table>

A. CLASSIFICATION OF SUBJECT MATTER
*H04B1/707(2006.01)i, H04J11/00(2006.01)i*

According to International Patent Classification (IPC) or to both national classification and IPC

B. FIELDS SEARCHED

Minimum documentation searched (classification system followed by classification symbols)
H04B1/707, H04J11/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
IEEE

C. DOCUMENTS CONSIDERED TO BE RELEVANT

| Category* | Citation of document, with indication, where appropriate, of the relevant passages | Relevant to claim No. |
|---|---|---|
| A | JP 2004-23463 A (Matsushita Electric Industrial Co., Ltd.), 22 January, 2004 (22.01.04), Claims 1 to 17 (Family: none) | 1-22 |
| A | JP 5-507397 A (Ericsson GE Mobile Communications Inc.), 21 October, 1993 (21.10.93), Full text<br>& WO 1992/011716 A1 & US 5151919 A<br>& JP 3081642 B2 & EP 491668 B1<br>& EP 491668 A3 & EP 491668 A2<br>& DE 69128927 E & CA 2076006 C<br>& BR 9106226 A & AU 645646 B<br>& AU 9136691 A | 1-22 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>15 February, 2007 (15.02.07) | Date of mailing of the international search report<br>27 February, 2007 (27.02.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/051005

C (Continuation).　DOCUMENTS CONSIDERED TO BE RELEVANT

| Category* | Citation of document, with indication, where appropriate, of the relevant passages | Relevant to claim No. |
|---|---|---|
| P,A | JP 2006-109430 A　(Toshiba Corp.),<br>20 April, 2006 (20.04.06),<br>Claims 1 to 3; Figs. 10 to 12<br>& GB 2418104 A　　　& US 2006/0050662 A1 | 1-22 |
| E,A | JP 2007-28054 A　(Matsushita Electric<br>Industrial Co., Ltd.),<br>01 February, 2007 (01.02.07),<br>Claims 1 to 5<br>(Family: none) | 1-22 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAEDA ; ATARASHI ; ABETA ; SAWAHASI.** VSF-OFCDM using two-dimensional spreading and its performance. *IEICE Technical Report RCS2002-61,* May 2002
- **ISHIHARA ; TAKEDA ; ADACHI.** DS-CDMA frequency-domain multi-access interference canceller. *IEICE Technical Report RCS2004-316,* January 2005

- **AKITA ; SUYAMA ; FUKAWA ; SUZUKI.** New interference cancellers for downlink MC-CDMA with transmit power control. *IEICE Technical Report RCS2002-35,* April 2002